# EUROPEAN PATENT APPLICATION

(11) **EP 2 429 202 A2**
(43) Date of publication of application: **14.03.2012**
(21) Application number: 11179231.3
(22) Date of filing: 29.08.2011
(51) Int. Cl.: H04N 13/00

(54) **Image display apparatus and method for operating image display apparatus**

(30) Priority: 13.09.2010 KR 20100089606; 13.09.2010 KR 20100089607
(71) Applicant: LG Electronics, Seoul, 150-721 (KR)
(72) Inventor: Lee, Hyungnam, 137-724 Seoul (KR); Kim, Uniyoung, 137-724 Seoul (KR); Jang, Saehun, 137-724 Seoul (KR)
(74) Representative: Cabinet Plasseraud

(57) **Abstract**

An image display apparatus and a method for operating an image display apparatus are provided. Optimized image quality setting values (or configuration values) may be applied so that content may be more correctly and conveniently used, thereby improving user convenience.

## Description

### CROSS-REFERENCE TO RELATED APPLICATIONS

This application claims priority from Korean Application No. 10-2010-0089606, filed September 13, 2010, and Korean Application No. 10-2010-0089607, filed September 13, 2010, the subject matters of which are incorporated herein by reference.

### BACKGROUND

### 1. Field

Embodiments of the present invention may relate to an image display apparatus and a method for operating an image display apparatus.

### 2. Background

An image display apparatus may display an image that can be viewed by the user. The image display apparatus may display a broadcast that the user has selected from among broadcasts transmitted by a broadcast station. Broadcasting is transitioning from analog broadcasting to digital broadcasting throughout the world.

Digital broadcasting may transmit digital video and audio signals. Thus, compared to analog broadcasting, digital broadcasting may be more robust to external noise, resulting in less data loss, and may also be advantageous in terms of error correction while providing clear high-resolution images or screens. Digital broadcasting may also provide bi-directional services.

As diversity of functions and content of the image display apparatus have increased, studies have been conducted on screen arrangement, screen switching, and/or content use methods optimized for efficient use of various functions and content of the image display apparatus.

Additionally, stereoscopic images and stereoscopic image technologies may be generalized and put into practical use not only in computer graphics, but also in various other environments and technologies.

### BRIEF DESCRIPTION OF THE DRAWINGS

Arrangements and embodiments may be described in detail with reference to the following drawings in which like reference numerals refer to like elements and wherein:

FIG. 1 is a block diagram showing an image display apparatus according to an embodiment;

FIG. 2 is a block diagram showing a controller of FIG. 1;

FIG. 3 illustrates how a 3D viewing device operates according to a frame sequential format;

FIG. 4 illustrates an exemplary format of a 3D image signal that can implement a 3D image;

FIG. 5 illustrates scaling schemes of a 3D image signal according to an embodiment;

FIG. 6 illustrates how a perceived depth of a 3D image or a 3D object varies according to an embodiment;

FIG. 7 illustrates how a perceived depth of an image (or the like) is controlled according to an embodiment;

FIG. 8 illustrates an exemplary arrangement of a display according to an embodiment;

FIG. 9 illustrates a method for operating a 3D viewing device;

FIG. 10 illustrates an image display apparatus and a remote control device according to an embodiment;

FIGs. 11A to 13B illustrate examples of a method for operating an image display apparatus according to an embodiment;

FIGs. 14 to 16 are flow charts illustrating a method for operating an image display apparatus according to an embodiment;

FIGs. 17A to 19C illustrate examples of a method for operating an image display apparatus according to an embodiment;

FIGs. 20 and 21 are flow charts illustrating a method for operating an image display apparatus according to an embodiment; and

FIGs. 22 to 26 illustrate examples of a method for operating an image display apparatus according to an embodiment.

### DETAILED DESCRIPTION

Exemplary embodiments may be described with reference to the attached drawings.

The words "module" or "unit", which may be added to an end of terms describing components, may be merely used for ease of explanation and may have no specific meaning or function with respect to components. Thus, the words "module" and "unit" may be used interchangeably.

As used hereinafter, items, objects, etc. may be described as being three-dimensional (3D), which corresponds to a perceived 3D. In other words, an object may be perceived by a user as being 3D.

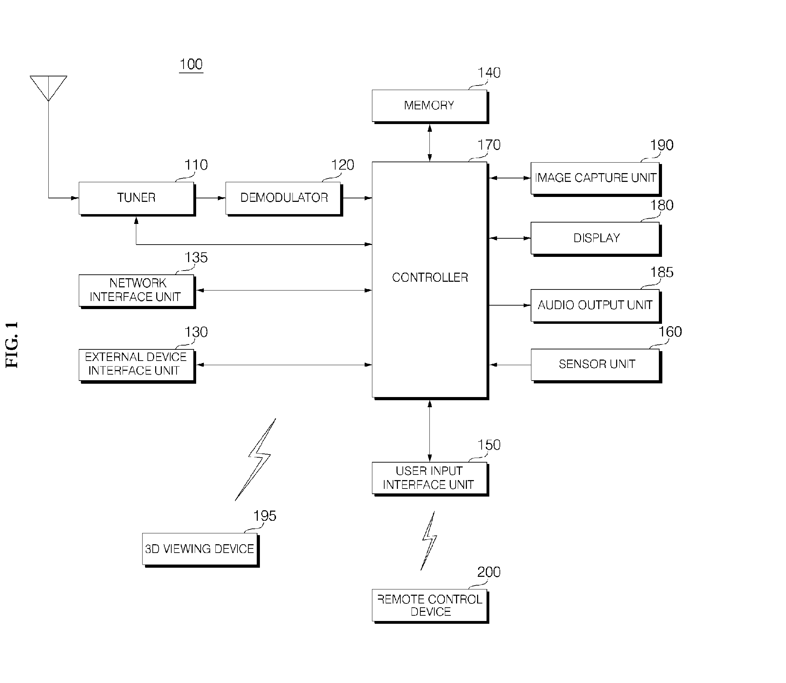

FIG. 1 is a block diagram showing an image display apparatus according to an embodiment. Other embodiments are configurations may also be provided.

As shown in FIG. 1, an image display apparatus 100 may include a tuner 110, a demodulator 120, an external device interface unit 130, a network interface unit 135, a memory 140, a user input interface unit 150, a sensor unit 160, a controller 170, a display 180, an audio output unit 185, an image capture unit 190, and a 3D viewing device 195.

The tuner 110 may tune to a Radio Frequency (RF) broadcast signal corresponding to a channel selected by a user from among RF broadcast signals received through an antenna or corresponding to each of the stored channels. The tuned RF broadcast signal may be converted into an Intermediate Frequency (IF) signal or a baseband video or audio signal.

For example, if the tuned RF broadcast signal is a digital broadcast signal, the tuned RF broadcast signal may be converted into a digital IF (DIF) signal and, if the tuned RF broadcast signal is an analog broadcast signal, the tuned RF broadcast signal may be converted into an analog baseband video/audio signal (Composite Video Baseband Signal (CVBS)/Sound IF (SIF)). That is, the tuner 110 may process a digital broadcast signal or an analog broadcast signal. The analog baseband video/audio signal (CVBS/SIF) output from the tuner 110 may be directly input to the controller 170.

The tuner 110 may additionally receive a single-carrier RF broadcast signal according to an Advanced Television System Committee (ATSC) scheme or a multiple-carrier RF broadcast signal according to a Digital Video Broadcasting (DVB) scheme.

The tuner 110 may sequentially tune to the RF broadcast signals of all the broadcast channels stored through a channel storage function from among the RF broadcast signals received through the antenna, and may convert the signals into IF signals or baseband video or audio signals.

The demodulator 120 may receive the converted DIF signal from the tuner 110 and perform a demodulation operation.

For example, if the DIF signal output from the tuner 110 is based on the ATSC system, the demodulator 120 may perform 8-Vestigial Side Band (VSB) modulation. The demodulator 120 may perform channel decoding. The demodulator 120 may include a trellis decoder, a deinterleaver, a Reed-Solomon decoder and/or the like to perform trellis decoding, deinterleaving and/or Reed-Solomon decoding.

For example, if the DIF signal output from the tuner 110 is based on the DVB system, the demodulator 120 may perform Coded Orthogonal Frequency Division Multiple Access (COFDMA) modulation. The demodulator 120 may also perform channel decoding. The demodulator 120 may include a convolutional decoder, a deinterleaver, a Reed-Solomon decoder and/or the like to perform convolutional decoding, deinterleaving and/or Reed-Solomon decoding.

The demodulator 120 may perform demodulation and channel decoding and may then output a Transport Stream (TS) signal. The TS signal may be a signal in which an image signal, an audio signal and a data signal are multiplexed. For example, the TS signal may be an MPEG-2 TS in which an MPEG-2 image signal, a Dolby AC-3 audio signal and/or the like are multiplexed. More specifically, the MPEG-2 TS may include a 4-byte header and a 184-byte payload.

The demodulator 120 may include separate demodulators according to the ATSC scheme and the DVB scheme. That is, the demodulator 120 may include an ATSC modulator and a DVB demodulator.

The TS signal output from the demodulator 120 may be input to the controller 170. The controller 170 may perform demultiplexing, image/audio signal processing and/or the like, and may then output an image through the display 180 and may output audio through the audio output unit 185.

The external device interface unit 130 may transmit or receive data to or from an external device connected to the interface unit 130. The external device interface unit 130 may include an AN input/output unit or a wireless communication unit.

The external device interface unit 130 may be connected to an external device such as a Digital Versatile Disc (DVD) player, a Blu-ray player, a game console, a camcorder. a (notebook) computer, or another appropriate type of external device, in a wired/wireless manner. The external device interface unit 130 may send an image signal, an audio signal and/or a data signal received from the connected external device to the controller 170 of the image display apparatus 100. The image signal, the audio signal or the data signal processed by the controller 170 may be output to the connected external device. To accomplish this, the external device interface unit 130 may include an A/V input/output unit and/or a wireless communication unit.

The A/V input/output unit may include a Universal Serial Bus (USB) port, a CVBS terminal, a component terminal, an S-video terminal (analog), a Digital Visual Interface (DVI) terminal, a High Definition Multimedia Interface (HDMI) terminal, an RGB terminal, and a D-SUB terminal for inputting the image signal and the audio signal from the external device to the image display apparatus 100.

The wireless communication unit may perform wireless Local Area Network (LAN) communication with another electronic device. The image display apparatus 100 may be connected to another electronic device over a network according to the communication standard such as Bluetooth, Radio Frequency Identification (RFID), Infrared Data Association (IrDA), Ultra Wideband (UWB), ZigBee, Digital Living Network Alliance (DLNA), or another appropriate type of communication protocol based on the desired characteristics.

The external device interface unit 130 may be connected to various set-top boxes through at least one of the above-described various terminals so as to perform an input/output operation with the set-top boxes.

The external device interface unit 130 may transmit or receive data to or from the 3D viewing device 195.

The network interface unit 135 may provide an interface for connecting the image display apparatus 100 to a wired/wireless network including an Internet network. The network interface unit 135 may include an Ethernet port for connection with a wired network. The network interface unit 135 may also use communication standards such as wireless LAN (WLAN) (Wi-Fi), wireless broadband (Wibro), world interoperability for microwave access (WiMax), high speed downlink packet access (HSDPA), or the like for connection with a wireless network.

The network interface unit 135 may receive content or data provided by an Internet or content provider or a network manager over a network. That is, the network interface unit 135 may receive content such as movies, advertisements, games, VOD, or broadcast signals and information associated with the content provided by the Internet or content provider over a network. The network interface unit 135 may receive update information and update files of firmware provided by the network manager. The network interface unit 135 may transmit data to the Internet or content provider or to the network manager.

Content may be received through the network interface 135 as well as the tuner 110, the external device interface 130, the memory 140, or another appropriate data I/O interface. The content may include broadcast programs, multimedia content, or the like, as well as data associated therewith such as icons, thumbnails, EPG, or the like. As used herein, content may also include control buttons or icons configured to execute prescribed operations on the image display apparatus 100.

The network interface unit 135 may be connected to, for example, an Internet Protocol TV (IPTV) to receive and transmit an image, audio or data signal processed by a set-top box for IPTV to the controller 170 and may transmit signals processed by the controller 170 to the set-top box for IPTV in order to enable bidirectional communication.

The IPTV may include an ADSL-TV, a VDSL-TV, an FTTH-TV and/or the like according to type of the transmission network and/or may include a TV over DSL, a Video over DSL, a TV over IP (TVIP), a Broadband TV (BTV), and/or the like. The IPTV may include an Internet TV capable of Internet access or a full-browsing TV.

The memory 140 may store a program for performing signal processing and control in the controller 170, and may store a processed image, audio or data signal.

The memory 140 may temporarily store an image, audio or data signal input through the external device interface unit 130. The memory 140 may store information about predetermined broadcast channels through a channel storage function such as a channel map.

The memory 140 may include at least one of a flash memory storage medium, a hard disk storage medium, a multimedia card micro medium, a card memory (e.g., SD memory, XD memory, and/or the like), a RAM, a ROM (EEPROM or the like), or another appropriate type of storage device. The image display apparatus 100 may reproduce and provide a file (e.g. a moving image file, a still image file, a music file, a document file, or the like) stored in the memory 140 to the user.

Although FIG. 1 shows an example in which the memory 140 is provided separately from the controller 170, embodiments are not limited to this example. The memory 140 may be included in the controller 170.

The user input interface unit 150 may send a signal input by the user to the controller 170 and/or send a signal from the controller 170 to the user.

For example, the user input interface unit 150 may receive a user input signal (e.g. power on/off, channel selection or screen setup) from a remote control device 200 (or remote controller) or may transmit a signal from the controller 170 to the remote control device 200 according to various communication schemes such as a Radio Frequency (RF) communication scheme or an Infrared (IR) communication scheme.

The user input interface unit 150 may send a user input signal input through a local key (not shown) such as a power key, a channel key, a volume key, or a setup value to the controller 170.

The sensor unit 160 may sense a position of a user or gestures made by the user and/or a position of the 3D viewing device 195. The sensor unit 160 may include a touch sensor, a voice sensor, a position sensor, a motion sensor, a gyro sensor, and/or the like.

A signal indicating a sensed position or gesture of the user and/or a sensed position of the 3D viewing device 195 may be input to the controller 170. This signal may also be input to the controller 170 through the user input interface unit 150.

The controller 170 may demultiplex the TS signal received from the tuner 110, the demodulator 120 or the external device interface unit 130 and/or may process demultiplexed signals to generate and output image or audio signals.

The image signal processed by the controller 170 may be input to the display 180 such that an image corresponding to the image signal is displayed on the display 180. The image signal processed by the controller 170 may also be input to an external output device through the external device interface unit 130.

The audio signal processed by the controller 170 may be audibly output through the audio output unit 185. The audio signal processed by the controller 170 may be input to an external output device through the external device interface unit 130.

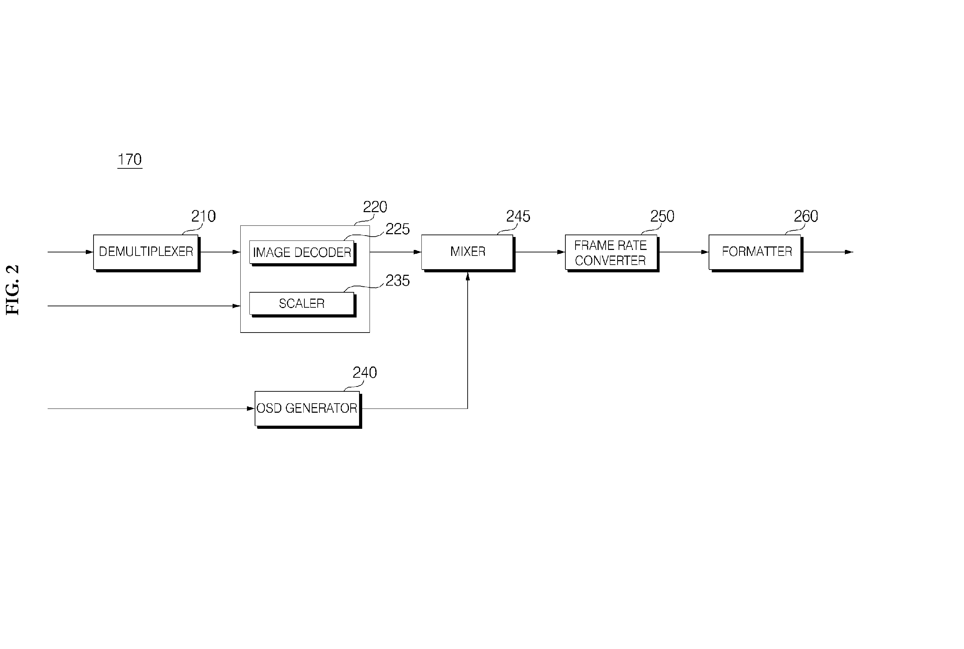

Although not shown in FIG. 1, the controller 170 may include a demultiplexer, an image processing unit, and/or the like as described below with reference to FIG. 2.

The controller 170 may control an overall operation of the image display apparatus 100. For example, the controller 170 may control the tuner 110 to tune to an RF broadcast corresponding to a channel selected by the user or a stored channel.

The controller 170 may control the image display apparatus 100 based on a user command input through the user input interface unit 150 and/or an internal program.

For example, the controller 170 may control the tuner 110 to receive the signal of a channel selected based on a predetermined channel selection command received through the user input interface unit 150. The controller 170 may then process the image, audio or data signal of the selected channel. The controller 170 may allow information of the channel selected by the user to be output through the display 180 or the audio output unit 185 together with the image and/or audio signal.

The controller 170 may allow an image or audio signal received from the external device (e.g. a camera or a camcorder) through the external device interface unit 130 to be output through the display 180 or the audio output unit 185 based on an external device image reproduction command received through the user input interface unit 150.

The controller 170 may control the display 180 to display an image. For example, the controller 170 may allow a broadcast image input through the tuner 110, an external input image input through the external device interface unit 130, an image input through the network interface unit 135, and/or an image stored in the memory 140 to be displayed on the display 180.

The image displayed on the display 180 may be a still image, a moving image, a 2D image and/or a 3D image.

The controller 170 may generate and display a predetermined object in the image displayed on the display 180 as a 3D object. For example, the object may be at least one of a web page (e.g. newspaper, magazine, or the like), an Electronic Program Guide (EPG), various menus, a widget, an icon, a still image, a moving image, and/or text. Other types of objects may also be provided.

Such a 3D object may provide a sense of perceived depth (or apparent depth) different from that of the image displayed on the display 180. The 3D object may be processed such that the 3D object appears to be located in front of the image displayed on the display 180.

The controller 170 may determine a user's position based on an image captured using the image capture unit 190. The controller 170 can obtain a distance (z-axis coordinate) between the user and the image display apparatus 100. The controller 170 may obtain an X-axis coordinate and a y-axis coordinate on the display 180 corresponding to the user's position.

The image display apparatus 100 may further include a channel browsing processing unit for generating a thumbnail image corresponding to a channel signal or an external input signal. The channel browsing processing unit may receive a Transport Stream (TS) signal output from the demodulator 120 or a TS signal output from the external device interface unit 130, extract an image from the received TS signal, and generate a thumbnail image. The generated thumbnail image may be input to the controller 170 without conversion or after being encoded. The generated thumbnail image may be input to the controller 170 after being encoded into a stream format. The controller 170 may display a thumbnail list including a plurality of thumbnail images on the display 180 using the received thumbnail images. The thumbnail list may be displayed in a brief viewing manner in which the thumbnail list is displayed in a portion of the display 180 on which an image is being displayed, or in a full viewing manner in which the thumbnail list is displayed over most of the display 180. Thumbnail images in the thumbnail list may be sequentially updated.

Examples of thumbnails and methods of using thumbnails may be disclosed in U.S. Patent Application 12/651,730, filed January 4, 2010, the subject matter of which is incorporated herein by reference.

The display 180 may convert an image signal, a data signal, an OSD signal or a control signal processed by the controller 170 or an image signal, data signal or a control signal received through the external device interface unit 130, and may generate a drive signal.

The display 180 may include a Plasma Display Panel (PDP), a Liquid Crystal Display (LCD), an Organic Light Emitting Diode (OLED) display, and/or a flexible display. The display 180 may include a 3D display. Other types of displays may also be provided.

The display 180 for 3D image viewing may be divided into a supplementary display type and a single display type.

In the single display type, a 3D image may be implemented on the display 180 without a separate subsidiary device (e.g., glasses). Examples of the single display type may include various types, such as a lenticular type and a parallax barrier type.

In the supplementary display type, 3D imagery may be implemented using a subsidiary device as a 3D viewing device 195, in addition to the display 180. Examples of the supplementary display type may include various types, such as a Head-Mounted Display (HMD) type and a glasses type. The glasses type may be divided into a passive type such as a polarized glasses type and an active type such as a shutter glasses type. The HMD type may be divided into a passive type and an active type.

Embodiments may be described focusing on an example where the 3D viewing device 195 is 3D glasses that enable 3D image viewing. The 3D glasses 195 may be passive-type polarized glasses or active-type shutter glasses. The 3D glasses 195 may also be described as conceptually including the HMD type.

The display 180 may include a touch screen and may function as an input device as well as an output device.

The audio output unit 185 may receive the audio signal processed by the controller 170 (for example, a stereo signal, a 3.1 channel signal or a 5.1 channel signal), and may output corresponding audio. The audio output unit 185 may be implemented using various types of speakers.

The image capture unit 190 may capture an image of the user. Although the image capture unit 190 may be implemented using one camera, embodiments are not limited to one camera and the image capture unit 190 may be implemented using a plurality of cameras. The image capture unit 190 may be provided on an upper portion of the display 180. Information of the image captured by the image capture unit 190 may be input to the controller 170.

The controller 170 may sense user gestures by the image captured using the image capture unit 190, the signal sensed using the sensing unit 160 and/or a combination thereof.

The remote control device 200 may transmit a user input signal to the user input interface unit 150. The remote control device 200 may use Bluetooth, Radio Frequency Identification (RFID) communication, IR communication, Ultra Wideband (UWB), ZigBee, and/or the like. The remote control device 200 may receive the image, audio, or data signal output from the user input interface unit 150 and may then display and/or audibly output the received signal.

The image display apparatus 100 may be a fixed digital broadcast receiver capable of receiving at least one of an ATSC (8-VSB) digital broadcast, a DVB-T (COFDM) digital broadcast or an ISDB-T (BST-OFDM) digital broadcast, and/or a mobile digital broadcast receiver capable of receiving at least one of a terrestrial DMB digital broadcast, a satellite DMB digital broadcast, an ATSC-M/H digital broadcast, a DVB-H (COFDM) digital broadcast or a media forward link only digital broadcast. The image display apparatus 100 may be a cable, satellite or IPTV digital broadcast receiver.

The image display apparatus may include a TV receiver, a mobile phone, a smart phone, a notebook computer, a digital broadcast terminal, a Personal Digital Assistant (PDA), a Portable Multimedia Player (PMP), and/or the like.

FIG. 1 is a block diagram of the image display apparatus 100 according to one embodiment. Some of the components of the image display apparatus 100 shown in the diagram may be combined or omitted or other components may be added thereto based on a specification of the image display apparatus 100 that is actually implemented. That is, two or more components of the image display apparatus 100 may be combined into one component or one component thereof may be divided into two or more components, as needed. Functions of the components described below may be only examples to describe embodiments and specific operations and units thereof do not limit the scope of the embodiments.

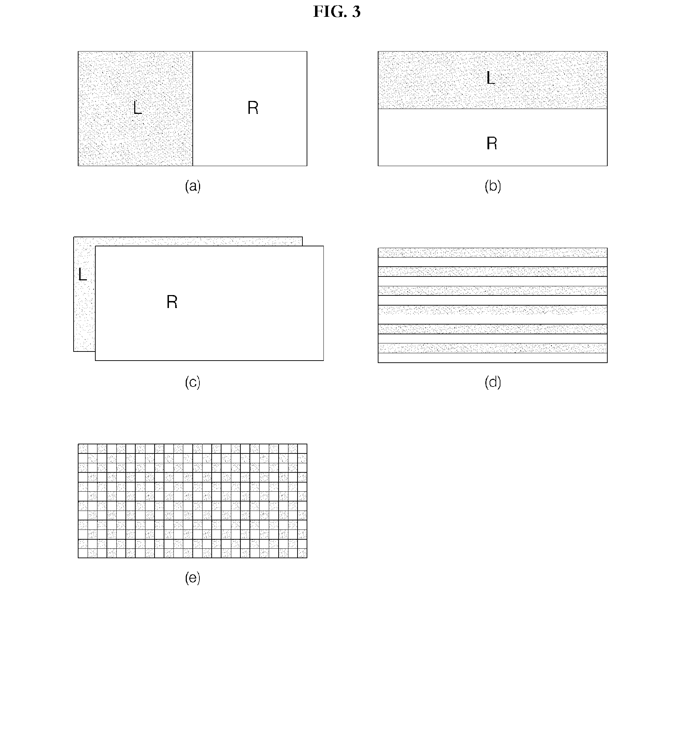

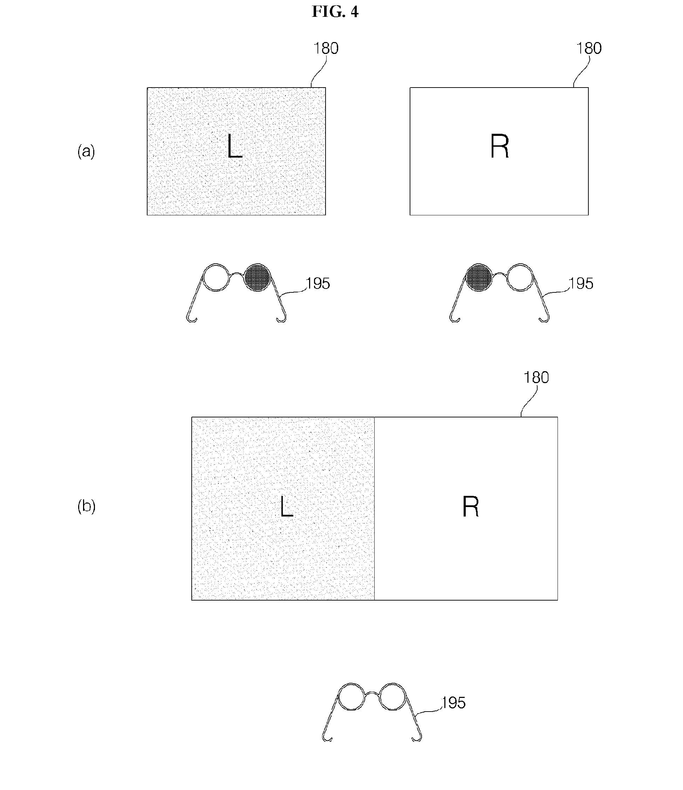

FIG. 2 is a block diagram showing the controller 170 (of FIG. 1). FIG. 3 illustrates formats of a 3D image, and FIG. 4 illustrates an operation of a 3D viewing device according to a format shown in FIG. 3.

As shown in FIG. 2, the controller 170 may include a demultiplexer 210, an image processing unit 220, an OSD generator 240, a mixer 245, a Frame Rate Converter (FRC) 250, and/or a formatter 260. The controller 170 may further include an audio processing unit and a data processing unit.

The demultiplexer 210 may demultiplex an input TS signal. For example, if an MPEG-2 TS signal is input, the demultiplexer 210 may demultiplex the MPEG-2 TS signal into image, audio and data signals. The TS signal input to the demultiplexer 210 may be a TS signal output from the tuner 110, the demodulator 120 and/or the external device interface unit 130.

The image processing unit 220 may perform image processing upon the demultiplexed image signal. The image processing unit 220 may include an image decoder 225 and a scaler 235.

The image decoder 225 may decode the demultiplexed image signal and the scaler 235 may adjust a resolution of the decoded image signal such that the image signal can be output through the display 180.

The image decoder 225 may include various types of decoders. For example, the image decoder 225 may include at least one of an MPEG-2 decoder, an H.264 decoder, an MPEG-C decoder (MPEG-C part 3), an MVC decoder, and an FTV decoder.

The image signal decoded by the image processing unit 220 may include a 2D image signal alone, a mixture of a 2D image signal and a 3D image signal, and/or a 3D image signal alone.

For example, an external image signal received from the image capture unit 190 or a broadcast image signal of a broadcast signal received through the tuner 110 may include a 2D image signal alone, a mixture of a 2D image signal and a 3D image signal, and/or a 3D image signal alone. Accordingly, the controller 170, and more specifically the image processing unit 220 in the controller 170, may perform signal processing upon the external image signal or the broadcast image signal to output a 2D image signal alone, a mixture of a 2D image signal and a 3D image signal, and/or a 3D image signal alone.

The image signal decoded by the image processing unit 220 may include a 3D image signal in various formats. For example, the decoded image signal may be a 3D image signal that includes a color difference image and a depth image, and/or a 3D image signal that includes multi-view image signals. The multi-view image signals may include a left-eye image signal and a right-eye image signal, for example.

As shown in FIG. 3, a format of the 3D image signal may include a side-by-side format (FIG. 3(a)) in which the left-eye image L and the right-eye image R are arranged in a horizontal direction, a top/down format (FIG. 3(b)) in which the left-eye image and the right-eye image are arranged in a vertical direction, a frame sequential format (FIG. 3(c)) in which the left-eye image and the right-eye image are arranged in a time division manner, an interlaced format (FIG. 3(d)) in which the left-eye image and the right-eye image are mixed in lines (i.e., interlaced), and/or a checker box format (FIG. 3(e)) in which the left-eye image and the right-eye image are mixed in boxes (i.e., box-interlaced).

The OSD generator 240 may generate an OSD signal based on a user input signal or automatically. For example, the OSD generator 240 may generate a signal for displaying a variety of information as graphics and/or text on a screen of the display 180 based on a user input signal. The generated OSD signal may include a variety of data such as a user interface screen, various menu screens, a widget and/or an icon of the image display apparatus 100. The generated OSD signal may include a 2D object and/or a 3D object.

The mixer 245 may mix the OSD signal generated by the OSD generator 240 with the image signal decoded by the image processing unit 220. Each of the OSD signal and the decoded image signal may include at least one of a 2D signal and a 3D signal. The mixed image signal may be provided to the frame rate converter 250.

The frame rate converter 250 may convert the frame rate of the input image. For example, a frame rate of 60Hz may be converted to 120Hz or 240Hz. In an example where the frame rate of 60Hz may be converted to 120Hz, the frame rate converter 250 may insert a first frame between the first frame and a second frame, or the frame rate converter 250 may insert a third frame estimated from the first frame and the second frame between the first frame and the second frame. In an example where the frame rate of 60Hz is converted into 240Hz, the frame rate converter 250 may insert the same three frames or three estimated frames between the frames.

The frame rate converter 250 may also directly output an input image signal without frame rate conversion. When a 2D image signal is input to the frame rate converter 250, the frame rate converter 250 may directly output the 2D image signal without frame rate conversion. On the other hand, when a 3D image signal is input, the frame rate converter 250 may convert the frame rate of the 3D image signal as described above.

The formatter 260 may receive the mixed signal (i.e., a mixture of the OSD signal and the decoded image signal) from the mixer 245 and may separate the mixed signal into a 2D image signal and a 3D image signal.

The 3D image signal may include a 3D object. Examples of such an object may include a Picture In Picture (PIP) image (still image or moving image), an EPG indicating broadcast program information, various menus, a widget, an icon, text, or an object, a person or a background present in an image, a web page (newspaper, magazine, or the like), etc. Other types of objects may also be provided.

The formatter 260 may change a format of the 3D image signal to any of the formats shown in FIG. 3, for example. Accordingly, an operation of the glasses-type 3D viewing device may be performed based on the format.

FIG. 4(a) shows operation of the 3D glasses 195 (e.g. shutter glasses) when the formatter 260 arranges and outputs the 3D image signal in the frame sequential format, from among the formats shown in FIG. 3.

More specifically, a left portion of FIG. 4(a) shows an example where the left-eye glass of the shutter glasses 195 may be opened and the right-eye glass of the shutter glasses may be closed when the left-eye image L is displayed on the display 180, and a right portion of FIG. 4(b) shows an example where the left-eye glass of the shutter glasses 195 may be closed and the right-eye glass of the shutter glasses may be opened when the right-eye image R is displayed on the display 180.

FIG. 4(b) shows operation of the 3D glasses 195 (e.g. polarized glasses) when the formatter 260 arranges and outputs the 3D image signal in the side-by-side format from among the formats shown in FIG. 3. The 3D glasses 195 used in the example of FIG. 4(b) may be shutter glasses. In this example, the shutter glasses may keep the left and right-eye glasses opened and may thus operate as polarized glasses.

The formatter 260 may switch a 2D image signal to a 3D image signal. For example, based on a 3D image generation algorithm, the formatter 260 may detect an edge or a selectable object from a 2D image signal and may then separate an object based on the detected edge or selectable object to generate a 3D image signal. The formatter 260 may then separate and arrange the generated 3D image signal into a left-eye image signal L and a right-eye image signal R as described above.

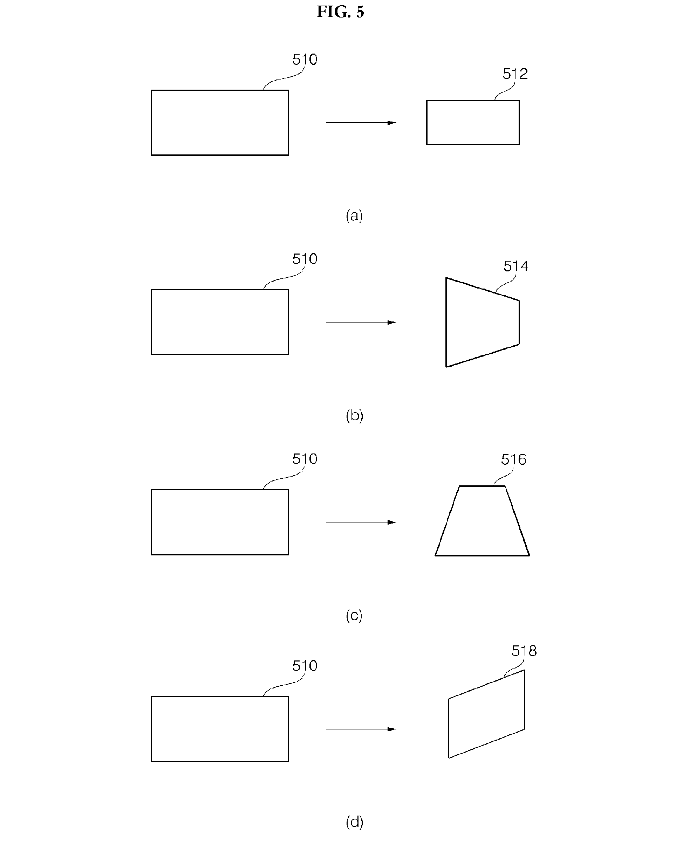

The controller 170 may further include a 3D processor for 3-dimensional (3D) effects signal processing, downstream of the formatter 260. The 3D processor may perform signal processing for brightness, tint, and color adjustment of an image signal in order to increase 3D effects. For example, the 3D processor may perform signal processing for making a near image portion clear and making a distant image portion unclear. Functions of the 3D processor may be incorporated into the formatter 260 or the image processing unit 220, as described below with reference to FIG. 5.

The audio processing unit 230 (in the controller 170) may perform audio processing upon the demultiplexed audio signal. The audio processing unit 230 may include decoders.

For example, when the demultiplexed audio signal is a coded audio signal, the audio processing unit 230 may decode the coded audio signal. More specifically, when the demultiplexed audio signal is an audio signal encoded based on the MPEG-2 standard, the audio processing unit 230 may decode the audio signal using an MPEG-2 decoder. When the demultiplexed audio signal is an audio signal coded based on the MPEG 4 Bit Sliced Arithmetic Coding (BSAC) standard according to a terrestrial DMB scheme, the audio processing unit 230 may decode the audio signal using an MPEG 4 decoder. When the demultiplexed audio signal is an audio signal coded based on the MPEG-2 Advanced Audio Codec (AAC) standard according to the satellite DMB or DVB-H scheme, the audio processing unit 230 may decode the audio signal using an AAC decoder. When the demultiplexed audio signal is an audio signal coded based on the Dolby AC-3 standard, the audio processing unit 230 may decode the audio signal using an AC-3 decoder.

The audio processing unit 230 (in the controller 170) may perform base and treble adjustment (equalization), volume adjustment, and/or the like.

The data processing unit in the controller 170 may perform data processing upon the demultiplexed data signal. For example, if the demultiplexed data signal is a coded data signal, the data processing unit may decode the coded data signal. The coded data signal may be EPG information including broadcast information such as a start time and an end time of a broadcast program broadcast through each channel. For example, the EPG information may include ATSC-Program and System Information Protocol (ATSC-PSIP) information in the ATSC system and may include DVB-Service Information (DVB-SI) in the DVB system. The ATSC-PSIP information and the DVB-SI may be included in a (4-byte) header of the above-described TS (i.e., the MPEG-2 TS).

Although FIG. 2 shows that signals from the OSD generator 240 and the image processing unit 220 are mixed by the mixer 245 and are then subjected to 3D processing by the formatter 260, embodiments are not limited to the FIG. 2 example, and the mixer 245 may be located downstream of the formatter 260. That is, the formatter 260 may perform 3D processing upon an output of the image processing unit 220 to generate a 3D signal, and the OSD generator 240 may generate an OSD signal and perform 3D processing upon the OSD signal to generate a 3D signal, and the mixer 245 may then mix the 3D signals.

The controller 170 (in FIG. 2) is an embodiment. Some of the components of the controller 170 may be combined and/or omitted or other components may be added thereto based on the type of the controller 170 that is actually implemented.

In particular, the frame rate converter 250 and the formatter 260 may be individually provided outside the controller 170.

FIG. 5 illustrates scaling schemes of a 3D image signal according to an embodiment.

As shown in FIG. 5, the controller 170 may perform 3D effects signal processing on the 3D image signal to increase 3D effects. More specifically, the controller 170 may perform signal processing for adjusting a size or a slope of a 3D object in the 3D image.

The controller 170 may enlarge or reduce a 3D image signal or a 3D object 510 in the 3D image signal by a specific ratio as shown in FIG. 5(a), where the reduced 3D object is denoted by "512". The controller 170 may partially enlarge or reduce the 3D object 510 into trapezoidal forms 514 and 516 as shown in FIGs. 5(b) and 5(c). The controller 170 may also rotate at least part of the 3D object 510 into a parallelogram form 518 as shown in FIG. 5(d). The stereoscopic effect (i.e., 3D effect) of the 3D image or the 3D object in the 3D image may be more emphasized through such scaling (i.e., size adjustment) or slope adjustment.

The difference between both parallel sides of the parallelogram form 514 or 516 may increase as the slope increases, as shown in FIG. 5(b) or 5(c), and/or the rotation angle may increase as the slope increases, as shown in FIG. 5(d).

The size adjustment or slope adjustment may be performed after the formatter 260 arranges the 3D image signal in a specific format. The size adjustment or slope adjustment may be performed by the scaler 235 in the image processing unit 220. The OSD generator 240 may generate an OSD object into any of the forms shown in FIG. 5 to emphasize 3D effects.

Signal processing such as brightness, tint, and/or color adjustment, in addition to size or slope adjustment shown in FIG. 5, may be performed on an image signal or object to increase 3D effects. For example, signal processing may be performed to make a near portion clear and to make a distant portion unclear. Such 3D effects signal processing may be performed in the controller 170 or in a separate 3D processor. When the 3D effects signal processing is performed in the controller 170, the 3D effects signal processing may be performed, together with size or slope adjustment, in the formatter 260 and/or may be performed in the image processing unit 220.

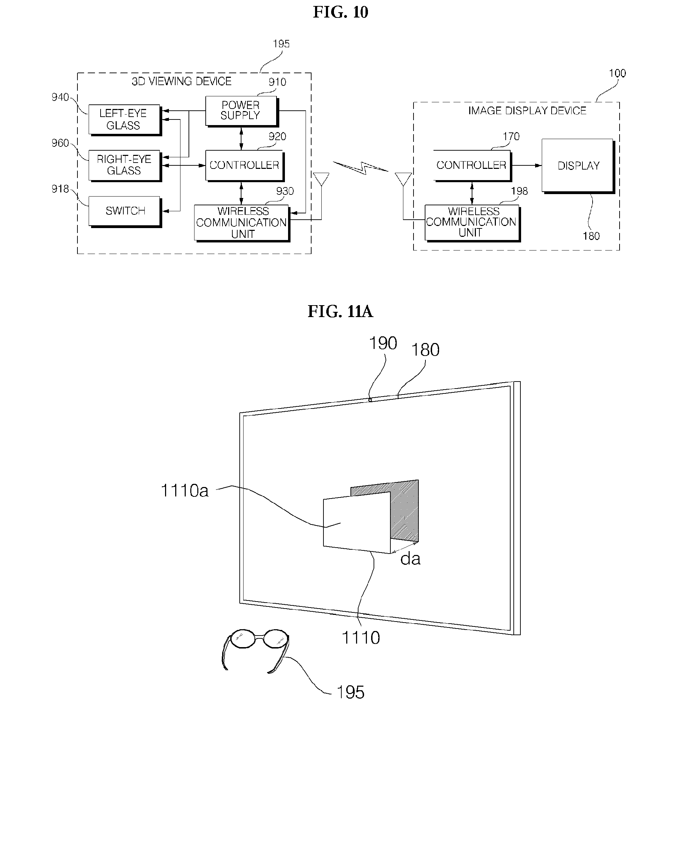

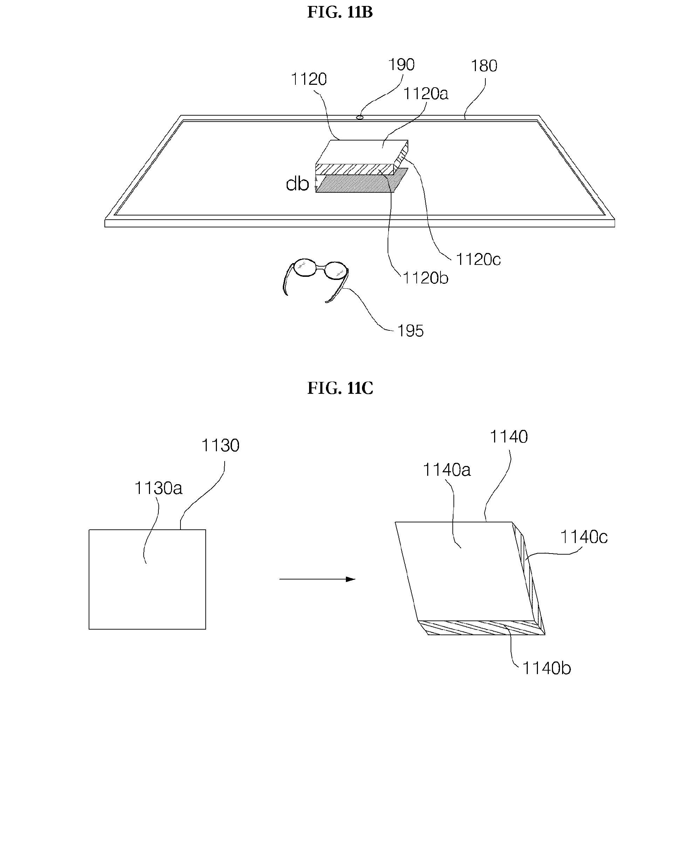

Signal processing for changing at least one of brightness, contrast, and/or tint of a 3D image or a 3D object of the 3D image and/or adjusting size or slope of an object in the 3D image may be performed when an arrangement of the display 180 (of the image display apparatus 100) is switched from an upright configuration to a horizontal configuration (substantially parallel to the ground). This may improve stereoscopic effects of the 3D image or the 3D object, compared to when the display 180 is arranged perpendicular to the ground, as described below with reference to FIG. 11.

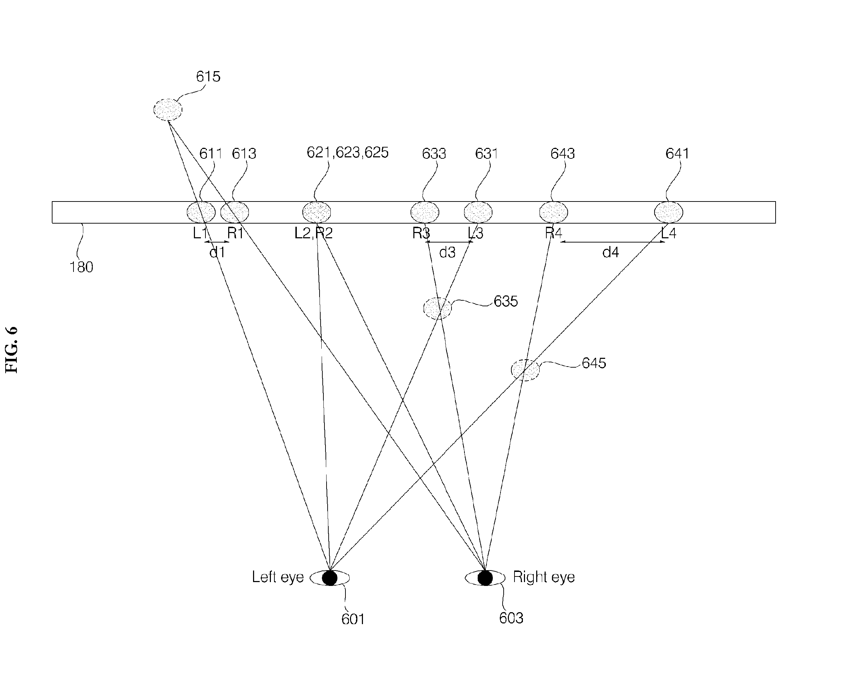

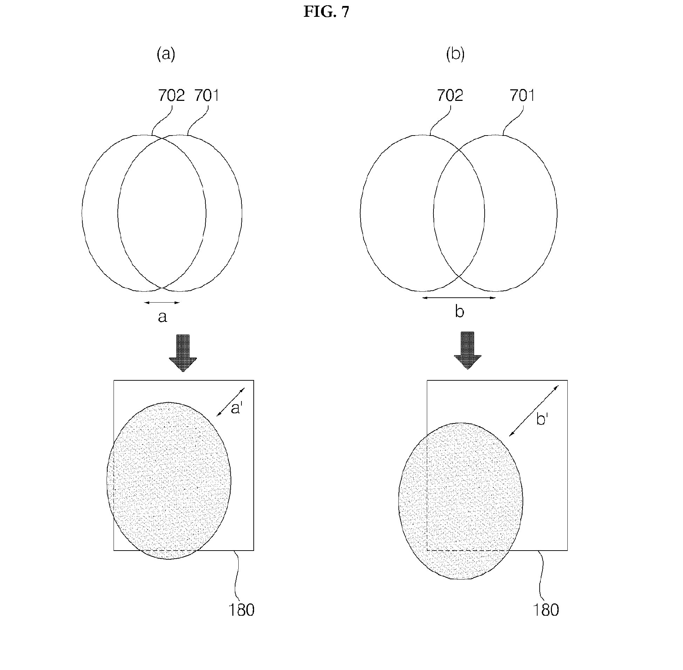

FIG. 6 illustrates image formation by a left-eye image and a right-eye image. FIG. 7 illustrates a perceived depth of a 3D image based on distance between a left-eye image and a right-eye image.

A plurality of images or a plurality of objects 615, 625, 635 and 645 may be shown in FIG. 6.

The first object 615 may include a first left-eye image 611 (L) based on a first left-eye image signal and a first right-eye image 613 (R) based on a first right-eye image signal. A distance between the first right-eye image 613 and the first left-eye image 611 on the display 180 is d1. The user may perceive that an image is formed at an intersection of a line connecting the left eye 601 and the first left-eye image 611 and a line connecting the right eye 603 and the first right-eye image 613. Accordingly, the user may perceive that the first object 615 is located behind the display 180.

The second object 625 may include a second left-eye image 621 (L) and a second right-eye image 623 (R). Since the second left-eye image 621 and the second right-eye image 623 are displayed so as to overlap each other on the display 180, a distance between the second left-eye image 621 and the second right-eye image 623 is 0. Accordingly, the user may perceive that the second object 625 is located on the display 180.

The third object 635 may include a third left-eye image 631 (L) and a third right-eye image 633 (R), and the fourth object 645 may include a fourth left-eye image 641 (L) and a fourth right-eye image 643 (R). The distance between the third left-eye image 631 and the third right-eye image 633 is d3, and the distance between the fourth left-eye image 641 and the fourth right-eye image 643 is d4.

According to the above-described method, the user may perceive that the third object 635 and the fourth object 645 are located at image formation locations and thus may be located in front of the display 180, as shown in FIG. 6.

The user may perceive that the fourth object 645 is located in front of the third object 635 (i.e., protrudes from the third object 635) since the distance d4 between the fourth left-eye image 641 (L) and the fourth right-eye image 643 (R) is greater than the distance d3 between the third left-eye image 631 (L) and the third right-eye image 633 (R).

The perceived distance (or apparent distance) between the display 180 and each of the objects 615, 625, 635 and 645, which is perceived by the user, may be referred to as a "depth" or a "perceived depth." The perceived depth of the object that appears to the user to be located behind the display 180 may have a negative value (-), and the perceived depth of the object that appears to the user to be located in front of the display 180 may have a positive value (+). That is, the perceived depth may increase as a degree increases of protrusion of the object from the display 180 toward the user.

As may be seen from FIG. 7, when a distance a between a left-eye image 701 and a right-eye image 702 shown in FIG. 7(a) is less than the distance b between a left-eye image 701 and a right-eye image 702 shown in FIG. 7(b), the perceived depth a' of the 3D object of FIG. 7(a) is less than the perceived depth b' of the 3D object of FIG. 7(b).

When the 3D image includes a left-eye image and a right-eye image, a position at which the image is formed as perceived by the user may change based on the distance between the left-eye image and the right-eye image. Accordingly, by adjusting the displayed distance between the left-eye image and the right-eye image, the perceived depth of the 3D image or the 3D object including the left-eye image and the right-eye image may be adjusted.

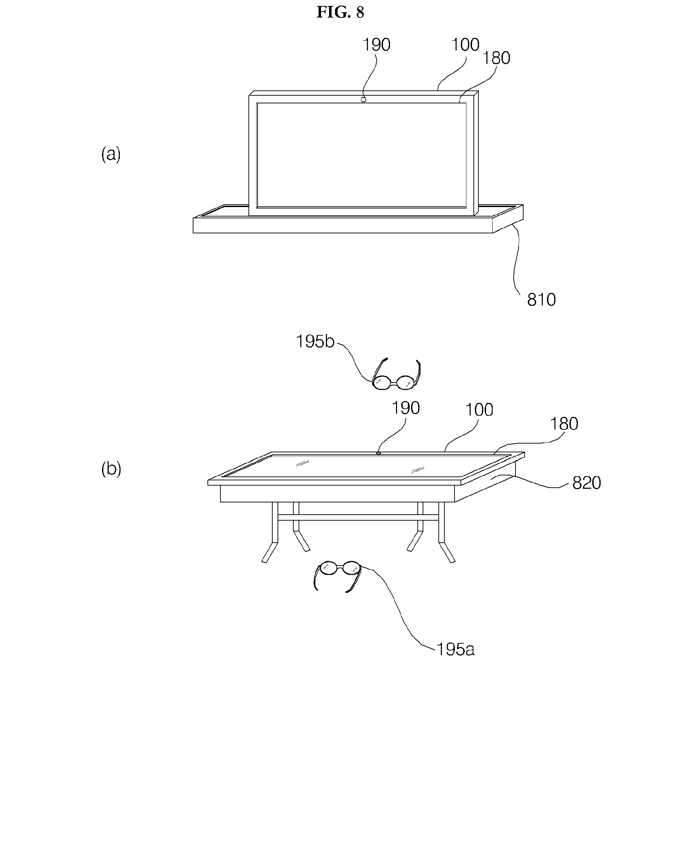

FIG. 8 illustrates an exemplary arrangement of a display of the image display apparatus of FIG. 1.

FIG. 8(a) illustrates that the display 180 (of the image display apparatus 100) may be arranged perpendicular to the ground. The image display apparatus 100 may be arranged on a support 810 for a vertical arrangement.

The support 810 may be a set-top box that may include at least one of the tuner 110, the demodulator 120, the external device interface unit 130, the network interface unit 135, the memory 140, the user input interface unit 150, the sensor unit 160, the controller 170, the display 180, the audio output unit 185, and/or a power supply.

Signal processing of an input image may be performed by the image display apparatus 100 and may also be performed by the support 810 that is a set-top box. The support 810 and the image display apparatus 100 may perform wired communication with each other.

FIG. 8(b) illustrates that the display 180 (of the image display apparatus 100) is arranged parallel to the ground (i.e., arranged substantially horizontally). The image display apparatus 100 may be arranged on a support 820 for a substantially horizontal arrangement. The image display apparatus 100 may also be provided on a table, a desk, a flat piece of furniture, and/or a floor rather than on the support 820. As used hereinafter, a horizontal arrangement may be considered a substantially horizontal arrangement, and/or parallel to a surface (such as ground) that may be considered as substantially parallel to the surface.

When the display 180 (of the image display apparatus 100) is arranged parallel to the ground as shown in FIG. 8(b), signal processing of an input image may be performed by the image display apparatus 100 and may also be performed by the support 810, which may be a set-top box. In this example, the support 810 and the image display apparatus 100 may perform wireless communication with each other.

When the display 180 (of the image display apparatus 100) is arranged parallel to the ground as shown in FIG. 8(b), the user may view a 3D image displayed on the display 180 using 3D viewing devices 195a and 195b.

The term "horizontal" may refer to a direction parallel to ground without a slope. That is, the horizontal direction may be a direction perpendicular to the direction of gravity. The display 180 may not be exactly perpendicular to the direction of gravity depending on horizontality of the floor or the support 320. The state in which the display 180 is arranged horizontally may include not only the state in which the display 180 is arranged exactly horizontally but also the state in which the screen of the display 180 is exposed upward (i.e., in a direction opposite to the direction toward the ground). The term "horizontal direction" may refer not only to a direction at an angle of exactly 90 degrees with respect to the direction of gravity, but also to a direction at an angle 90 degrees with respect to the direction of gravity with a certain margin of errors depending on the horizontality of the floor or the support 320.

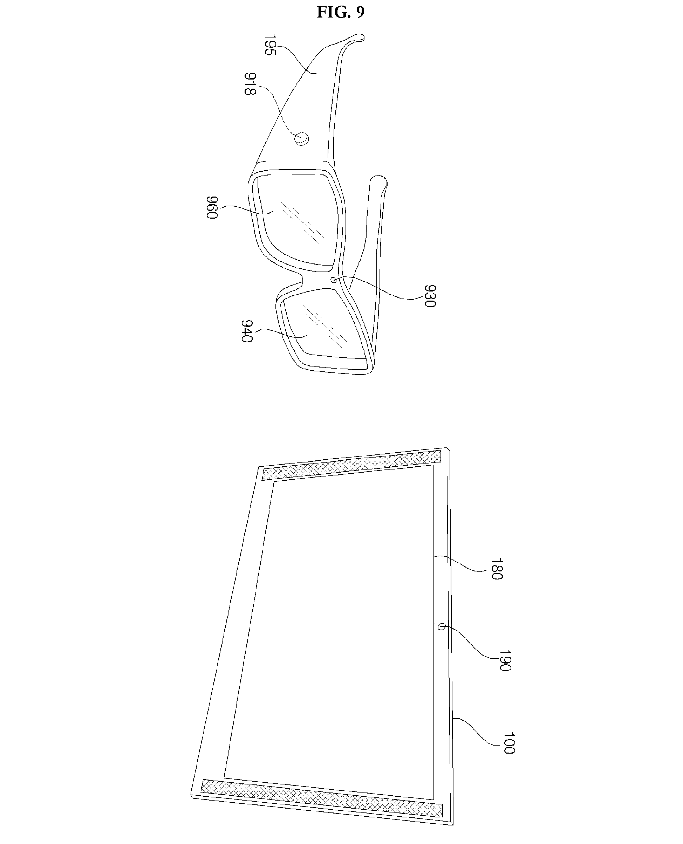

FIG. 9 illustrates a 3D viewing device and an image display apparatus according to an embodiment. FIG. 10 is a block diagram of the 3D viewing device and the image display apparatus of FIG. 9.

As shown in FIGs. 9 and 10, the 3D viewing device 195 may include a power supply 910, a switch 918, a controller 920, a wireless communication unit 930, a left-eye glass 940, and a right-eye glass 960, for example.

The power supply 910 may supply power to the left-eye glass 940 and the right-eye glass 950. A drive voltage VthL may be applied to the left-eye glass 940 and a drive voltage VthR may be applied to the right-eye glass 960. Each of the left-eye glass 940 and the right-eye glass 960 may be opened based on the applied drive voltage.

The drive voltages VthL and VthR may be alternately provided in different periods and the drive voltages VthL and VthR may have different levels so that polarization directions of the left-eye glasses 940 and the right-eye glasses 950 are different.

The power supply 910 may supply operational power to the controller 920 and the wireless communication unit 930 in the 3D viewing device 195.

The switch 918 may be used to turn on or to turn off the 3D viewing device 195. More specifically, the switch 918 may be used to turn on or to turn off the operational power of the 3D viewing device 195. That is, when the switch 918 is turned on, the power supply 910 may be activated to supply the operational power to the controller 920, the wireless communication unit 930, the left-eye glass 940, and the right-eye glass 960.

The controller 920 may control the left-eye glass 940 and the right-eye glass 960 in the 3D viewing device 195 to be opened or closed in synchronization with a left-eye image frame and a right-eye image frame displayed on the display 180 (of the image display apparatus 100). The controller 920 may open or close the left-eye glass 940 and the right-eye glass 960 in synchronization with a synchronization signal Sync received from the wireless communication unit 198 (in the image display apparatus 100).

The controller 920 may control operation of the power supply 910 and the wireless communication unit 930. When the switch 918 is turned on, the controller 920 may control the power supply 910 to be activated to supply power to each component.

The controller 920 may control the wireless communication unit 930 to transmit a pairing signal to the image display apparatus 100 to perform pairing with the image display apparatus 100. The controller 920 may also receive a pairing signal from the image display apparatus 100.

The wireless communication unit 930 may transmit or receive data to or from the wireless communication unit 198 (of the image display apparatus 100) using an Infrared (IR) scheme or a Radio Frequency (RF) scheme. More specifically, the wireless communication unit 930 may receive a synchronization signal Sync for opening or closing the left-eye glass 940 and the right-eye glass 960 from the wireless communication unit 198. Opening and closing operations of the left-eye glass 940 and the right-eye glass 960 may be controlled based on the synchronization signal Sync.

The wireless communication unit 930 may transmit or receive a pairing signal to or from the image display apparatus 100. The wireless communication unit 930 may also transmit a signal to the image display apparatus 100 indicating whether or not the 3D viewing device 195 is being used.

The left-eye glass 940 and the right-eye glass 960 may be active-type left-eye and right-eye glasses that are polarized based on an applied electrical signal. The left-eye glass 940 and the right-eye glass 960 may change their polarization directions based on an applied voltage.

For example, the left-eye glass 940 and the right-eye glass 960 may be alternately opened based on a synchronization signal Sync from the image display apparatus 100. The 3D viewing device 195 may be shutter glasses.

The image display apparatus 100 may include the wireless communication unit 198, the controller 170, and the display 180 as described above with respect to FIGs. 1 and 2. The following description may be provided focusing on operation of the 3D viewing device 195.

When a 3D viewing device 195 is detected, the wireless communication unit 198 may transmit a synchronization signal to the 3D viewing device 195. For example, the wireless communication unit 198 may transmit a synchronization signal allowing the left-eye glass 940 and the right-eye glass 960 of the 3D viewing device 195 to be opened in synchronization with a left-eye image frame and a right-eye image frame that are sequentially displayed on the display 180.

The controller 170 may control the wireless communication unit 198 to output a corresponding synchronization signal according to a left-eye image frame and a right-eye image frame that are sequentially displayed on the display 180. The controller 170 may control the wireless communication unit 198 to transmit or receive a pairing signal to perform pairing with the 3D viewing device 195.

FIGs. 11A to 13B are drawings to explain examples of a method for operating an image display apparatus.

The controller 170 may determine whether or not the display 180 is arranged substantially parallel to the ground (FIG. 8(b)) using the sensor unit 160 or the memory 140. For example, the determination of whether or not the display 180 is arranged parallel to the ground may be detected by using a gyro sensor in the sensor unit 160, and the detection signal may then be input to the controller 170.

When a 3D image is displayed, the controller 170 may perform 3D effects signal processing on the 3D image when the display 180 is arranged substantially parallel to the ground.

The 3D effects signal processing may be signal processing for changing at least one of sharpness, brightness, contrast, and/and tint of a 3D image, or the 3D effects signal processing may be signal processing for adjusting a size or a slope of an object in the 3D image.

The 3D effects signal processing may be deactivated when the display 180 (of the image display apparatus 100) is arranged parallel to the ground and may then be performed when the display 180 is arranged perpendicular to the ground. When the display 180 is arranged vertically, more 3D effects signal processing may be performed than when the display 180 is arranged horizontally.

FIG. 11A illustrates that a 3D object 1110 is displayed when the display 180 is arranged perpendicular to the ground. When the user wears the 3D viewing device 195, the user may view the 3D object 1110 such that the 3D object 1110 having a specific depth da, and more particularly such that a first surface 1110a of the 3D object 1110 protrudes.

FIG. 11B illustrates that a 3D object 1120 is displayed when the display 180 is arranged substantially parallel to the ground. When the user wears the 3D viewing device 195, the user may view the 3D object 1120 as a protruding 3D object having a specific depth db. The user may view the 3D object 1120 such that not only a first surface 1120a protrudes but also both a second surface 1120b and a third surface 1120c of the 3D object 1120 protrude.

When the display 180 is arranged substantially parallel to the ground, there may be no graphics surrounding the 3D object 1120 and thus the 3D object 1120 may be displayed, providing a live stereoscopic effect, such that the 3D object 1120 appears to stand within a real space in which the user is located, similar to a hologram.

FIG. 11C illustrates 3D effects signal processing.

When the display 180 (of the image display apparatus 100) is arranged perpendicular to the ground, the controller 170 may assign an object 1130a depth da caused by a binocular disparity between left-eye and right-eye images. Accordingly, the 3D object 1110 may appear to protrude as shown in FIG. 11A. 3D effects signal processing may be omitted or may be slightly performed. Thus, scaling or slope adjustment, described above with respect to FIG. 5, may not be performed on a first region 1130a of the object 1130.

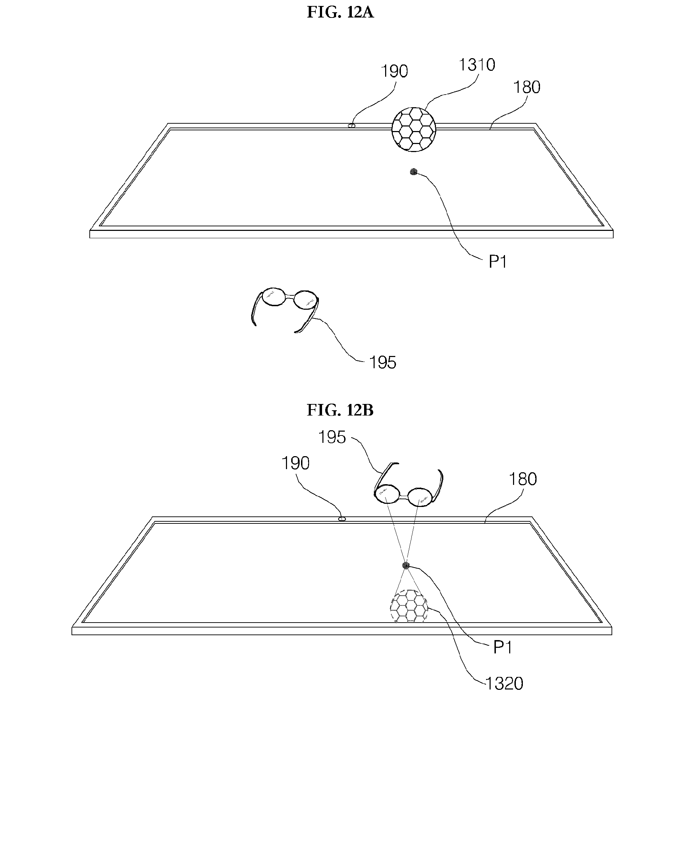

On the other hand, when the display 180 is arranged substantially parallel to the ground, the controller 170 may assign an object 1140a depth db caused by a binocular disparity between left-eye and right-eye images. Accordingly, the 3D object 1120 may appear to protrude as shown in FIG. 12B. Additionally, 3D effects signal processing may be performed. More 3D effects signal processing may be performed than when the display 180 is arranged vertically.

Processing may be performed to partially rotate a first region 1140a of the object 1140 such that the form of the object 1140 is changed from a rectangular form to a parallelogram form, as described above with respect to FIG. 5. Additionally, a second region 1140b and a third region 1140c may be added to edges of the first region 1140a to provide 3D effects. The second region 1140b and the third region 1140c may be newly generated based on edges of the first region 1140a.

The 3D effects signal processing may be performed by decoding an image of a new view and adding the decoded image to the original image. For example, when an input image signal is a multi-view image encoded according to multi-view video coding (MVC) or the like, an image of a view corresponding to the second region 1140b shown in FIG. 11C and an image of a view corresponding to the third region 1140c included in the multi-view image may be decoded, and the decoded images of the views may then be added to the image (i.e., left-eye and right-eye images) of the view corresponding to the first region 1140a of FIG. 11C.

Accordingly, the stereoscopic effect (i.e., the 3D effect) of the 3D object may increase when the display 180 is arranged perpendicular to the ground, compared to when the display 180 is arranged substantially parallel to the ground.

The sensor unit 160 or the image capture unit 190 may detect a position of the 3D viewing device 195 for 3D image viewing. For example, the user or the 3D viewing device 195 may be detected using a position sensor in the sensor unit 160.

The position of the 3D viewing device 195 may also be detected using the wireless communication unit 198 (of the image display apparatus 100), which may communicate with the wireless communication unit 930 (of the 3D viewing device 195).

FIG. 12A illustrates that a 3D object may be displayed when the display 180 is arranged substantially parallel to the ground. More specifically, when the user wears the 3D viewing device 195 at a position near the lower portion of the display 180 on which the image capture unit 190 is not provided, the 3D object 1310 may appear to protrude (or to be positioned) at a certain distance above a point P1 on the display 180.

FIG. 12B illustrates that a 3D object may be displayed when the display 180 is arranged substantially parallel to the ground. More specifically, when the user wears the 3D viewing device 195 at a position near the upper portion of the display 180 on which the image capture unit 190 is provided, the 3D object 1310 may appear to be sunken (or to be positioned) below the point P1 on the display 180.

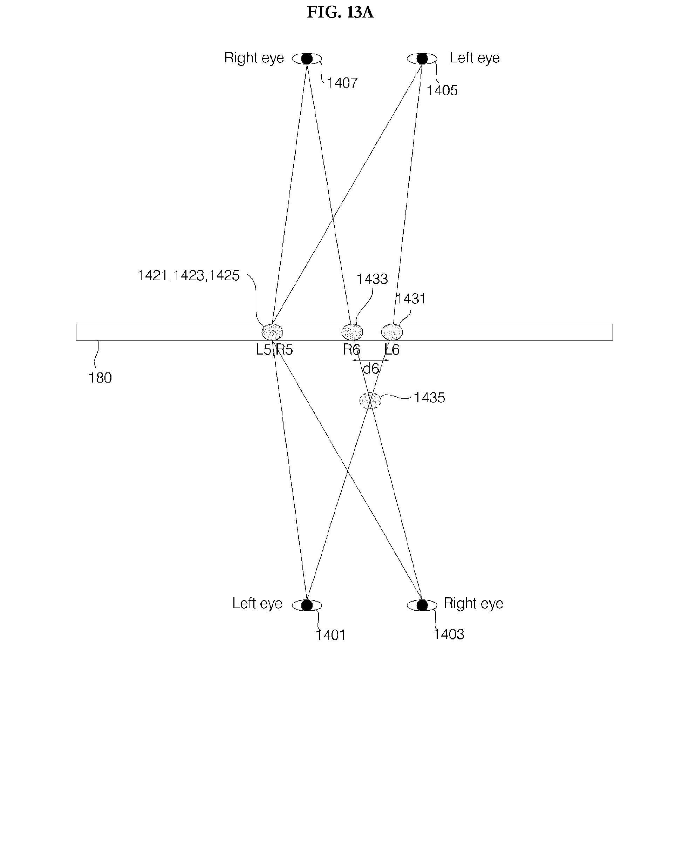

FIG. 13A illustrates how an image of a 3D object is formed depending on a position of each user (i.e., the position of the 3D viewing device 195).

In FIG. 13A, it is assumed that a first user (i.e., a first viewing device) may be located near the lower portion of the display 180 on which the image capture unit 190 is not provided (as shown in FIG. 12A) and that a second user (i.e., a second viewing device) may be located near the upper portion of the display 180 on which the image capture unit 190 is provided (as shown in FIG. 12B).

In the example of FIG. 13A, a first object 1425 may include a first left-eye image 1421 (L) and a first right-eye image 1423(R) that are displayed at an interval of 0 in an overlapping manner on the display 180. Accordingly, the first and second users may perceive that the first object 1425 is located on the display 180.

A second object 1435 may include a second left-eye image 1431 (L) and a second right-eye image 1433(R) that are displayed at an interval of d6.

The first user may perceive that an image is formed at an intersection between a line connecting a left eye 1401 and the second left-eye image 1431 and a line connecting a right eye 1403 and the second right-eye image 1433. Thus, the first user may perceive the second object 1435 as being located in front of the display 180 such that the second object 1435 appears to protrude from the display 180.

On the other hand, the second user may perceive that an image is formed at an intersection between a line connecting a left eye 1405 and the second left-eye image 1431 and a line connecting a right eye 1407 and the second right-eye image 1433. Thus, the second user may perceive the second object 1435 as being located below the display 180 such that the second object 145 appears to be sunken below the display 180.

That is, when the first viewing device and the second viewing device are located at opposite sides of the display 180 that is arranged parallel to the ground, a user wearing one of the first and second viewing devices may perceive a 3D image (or a 3D object) displayed on the display 180 as a protruding 3D image, and a user wearing the other viewing device may perceive the 3D image (or the 3D object) as being a sunken 3D image.

An embodiment may suggest that a left-eye glass and a right-eye glass of one of the plurality of viewing devices may be switched.

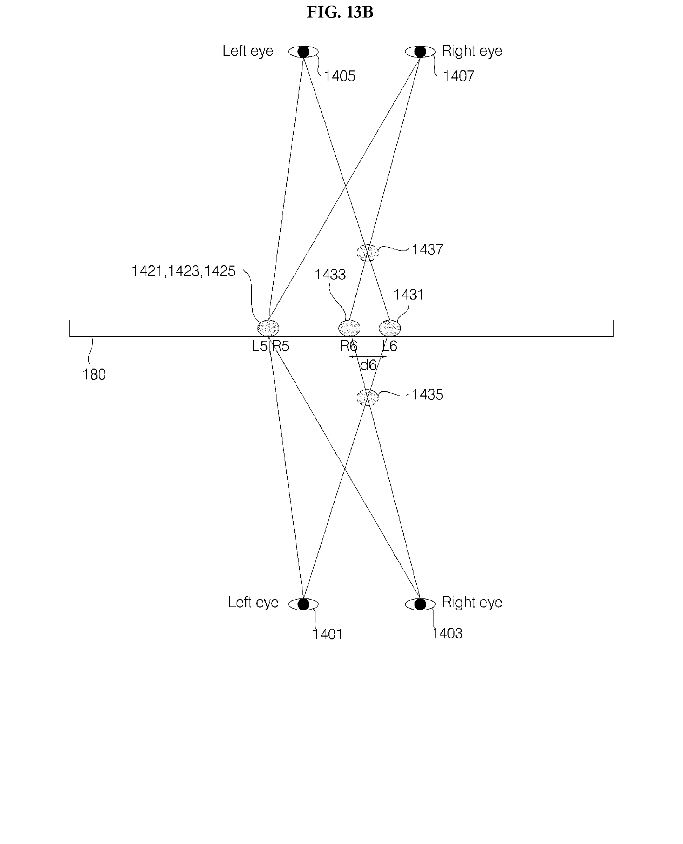

FIG. 13B illustrates how an image of a 3D object is formed depending on a position of each user (i.e., the position of the 3D viewing device 195).

The difference between FIG. 13B and FIG. 13A is that the left and right eyes of the second user may be switched. More specifically, the left-eye glass and the right-eye glass of the 3D viewing device worn by the second user may be switched, rather than the left and right eyes of the second user.

As can be seen from FIG. 13B, both the first and second users may perceive the first object 1425 to be located on the display 180, as in the example of FIG. 13A.

Additionally, the first user may perceive that an image is formed at an intersection between a line connecting the left eye 1401 and the second left-eye image 1431 and a line connecting the right eye 1403 and the second right-eye image 1433. Thus, the first user may perceive the second object 1435 as being located in front of the display 180 such that the second object 1435 appears to protrude from the display 180.

On the other hand, the second user may perceive that an image is formed at an intersection between a line connecting the left eye 1405 and the second left-eye image 1431 and a line connecting the right eye 1407 and the second right-eye image 1433. The second user may perceive the second object 1435 as being located in front of the display 180 such that the second object 1435 appears to protrude from the display 180 since the left eye 1405 and the right eye 1407 of the second user have been switched as compared to the example of FIG. 13A.

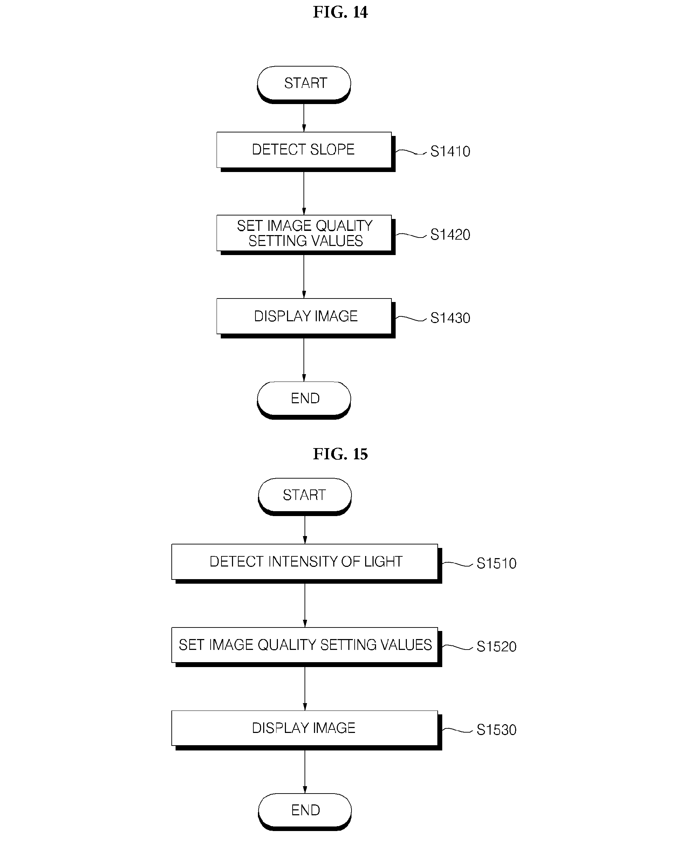

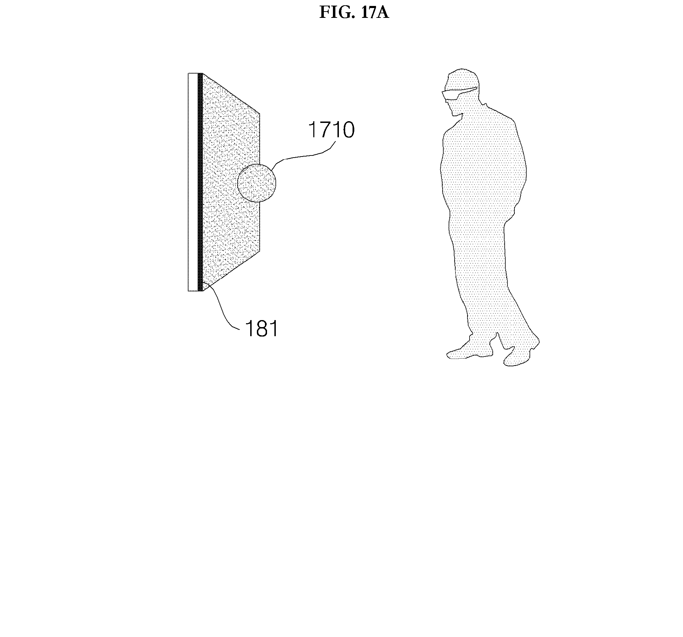

FIGs. 14 to 16 are flow charts illustrating a method for operating an image display apparatus according to an embodiment. FIGs. 17A to 19C illustrate examples of the method for operating an image display apparatus according to the embodiment. Other embodiments and configurations may also be provided.

As shown in FIG. 14, in a method for operating the image display apparatus according to an embodiment, the controller 170 may detect a slope of the display (S1410).

The controller 170 may determine whether (or not) the display of the image display apparatus 100 is arranged horizontally and the slope of the display 180 with respect to a horizontal direction by using the sensor unit 160 or the image capture unit 190.

For example, the sensor unit 160 may include a gyro sensor. The gyro sensor may sense movement and rotation information of the display 180. The gyro sensor may sense movement and rotation information of the display 180 with respect to x, y, and z axes. The sensor unit 160 may detect the slope of the display 180 with respect to ground by using the gyro sensor, and the detected signal may be input to the controller 170.

The controller 170 may set image quality setting values based on the detected slope of the display (S1420), the controller 170 and may control the display 180 to display an image based on the image quality setting values (S1430).

Influences of external environments (e.g. an external light source) may vary depending on an arrangement state (e.g. the slope) of the display 180, and aspects of the use of the image display apparatus by the user (such as a position of the user) may vary depending on the arrangement state of the display 180. Images displayed on the display 180 may be viewed differently depending on ambient environments even when the images are identical due to influences of the ambient environments, such as luminance, color temperature, and/or the like.

Visibility of an image displayed on the display 180 may be very low when an intensity of ambient illumination is significantly greater than a brightness of the screen of the display 180. Accordingly, there is a need to allow visibility of an image displayed on the display 180 to be maintained even when the ambient environment has changed and particularly to prevent a reduction of visibility of an image displayed on the display 180 in bright ambient environments.

There may also be a need to perform configuration setting (and more particularly image quality setting) optimized for the arrangement state of the display 180. Therefore, the slope of the display may be detected (or determined), image quality setting values optimized for the detected slope may be set, and an image may be displayed according to the set image quality setting values.

The display may be provided parallel to the ground. The horizontally arranged display may have a wide area and angle for receiving light from an external light source (such as a fluorescent lamp), compared to when the display is arranged vertically, and the horizontally arranged display may have a different viewing angle from when the display is arranged vertically. Accordingly, an optimized image quality setting may be more required when the display is arranged horizontally.

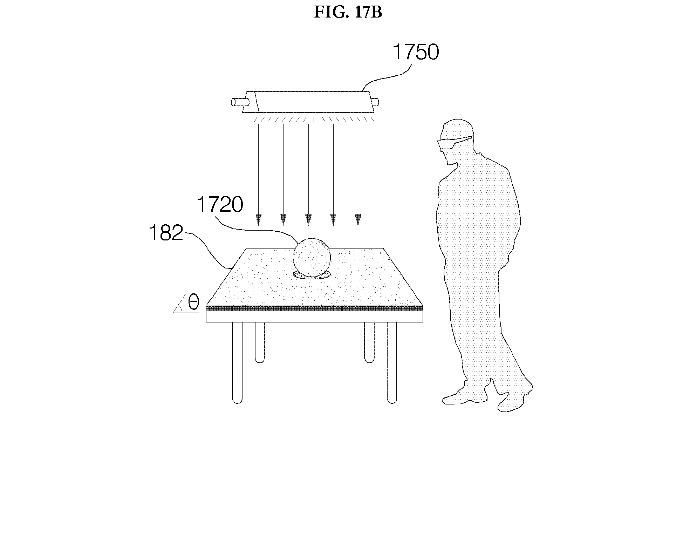

FIG. 17A illustrates an example in which a vertically arranged display 181 displays a 3D object 1710. FIG. 17B illustrates an example in which a horizontally arranged display 182 displays a 3D object 1720.

Even when the 3D objects 1710 and 1720 displayed on the displays 181 and 182 shown in FIGs. 17A and 17B are substantially identical, the displays 181 and 182 may display the 3D objects 1710 and 1720 using different image quality setting values since inclination angles of the displays 181, 182 with respect to the ground or with respect to the line parallel to the ground are different.

The images displayed using the different image quality setting values may be 3D images. When a 3D object 1720 is displayed on a display that is arranged horizontally (or is approximately horizontally), there may be no background image around the 3D object 1720 and thus the 3D object 1720 may provide a realistic stereoscopic effect such that the 3D object 1720 appears to stand within real space in which the user is located, similar to a hologram. However, when a 3D image is displayed on the horizontally arranged display, influences of external environments (and specifically the external light source 1750) may more seriously affect visibility of the 3D image and therefore inclination angle of the display may be detected and image quality setting values may be changed based on the detected inclination angle.

The image quality setting values may include at least one of a contrast ratio, a brightness, a sharpness, a color saturation, a color, and/or a 3D rendering setting value.

3D rendering setting values may provide a sense of realism to the image taking into consideration external information of the image such as color and position of a light source to generate a 3D image. The 3D rendering setting values may include at least one of setting values including a contrast ratio, a brightness, a sharpness, and a color saturation, and may also include image processing setting values for increasing a sense of volume, texture, and/or realism of the object. The types and set values of the 3D rendering setting values may vary depending on which rendering scheme is applied.

The image quality setting value setting operation S1420 may include increasing at least one of setting values included in previous image quality setting values when an inclination angle is less than a predetermined angle θ.

That is, when the detected inclination angle of the display with respect to ground (or with respect to a horizontal line of the ground) is less than the predetermined angle θ, an image displayed on the display may appear darker than or may appear with smaller visibility than when the display is arranged vertically or when the inclination angle of the display is greater than the predetermined angle θ. Therefore, when the detected inclination angle of the display is less than the predetermined angle θ, image quality setting values such as a brightness, a sharpness, and a color saturation may be increased to improve visibility of the image displayed on the display.

The image quality setting value setting operation S1420 may include setting at least one setting value (included in the image quality setting values) to a higher value as the inclination angle (i.e., the slope of the display with respect to the ground) decreases. That is, the setting values may be set to automatically change in inverse proportion to the slope.

The predetermined angle θ may be determined to be different based on the size of the display and may also be determined by a user input.

The method may further include displaying a setting menu window for setting the image quality setting values, wherein the setting values may be changed by user input.

As shown in FIG. 15, the method for operating the image display apparatus may include detecting (or determining) an intensity of light from an external light source (S1510), setting an image quality setting value based on the intensity of light (S1520), and displaying an image on the display based on the image quality setting value (S1530).

While image quality setting values are set and applied based on the slope of the display in the embodiment of FIG. 14, the embodiment of FIG. 15 differs from the embodiment of FIG. 14 in that the intensity of light of the external light source is measured and image quality setting values are set and applied based on the measured intensity, and FIG. 15 is similar to FIG. 14 in that an image according to optimized settings is displayed at the image display operation.

Accordingly, similar to FIG. 14, the display may be arranged parallel to the ground and the image may be a 3D image.

The image quality setting value setting operation S1520 may include increasing at least one setting value from previous image quality setting values when the light intensity is greater than a reference level.

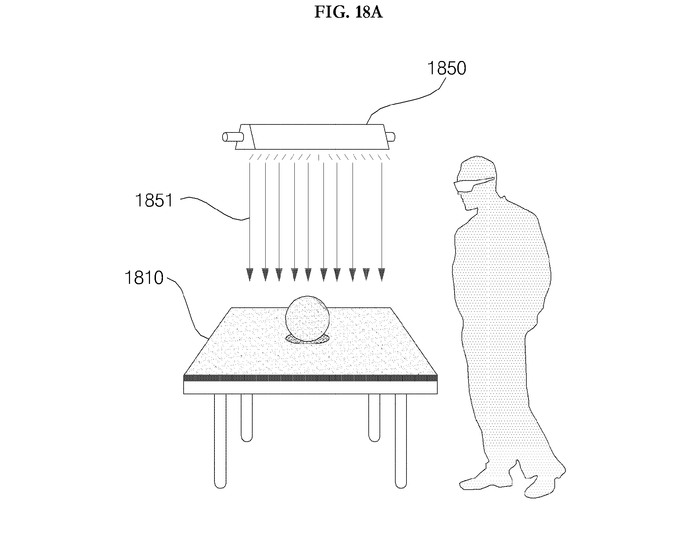

More specifically, when the intensity of light 1851 from an external light source 1850 is greater than the reference level, the image may appear relatively dark or may appear with a low visibility due to influence of the external light source 1850, as shown in FIG. 18A. Accordingly, an image 1810, to which image quality setting values (such as a brightness, a sharpness, and a color saturation) higher than previous values are applied, may be displayed to increase visibility of the image.

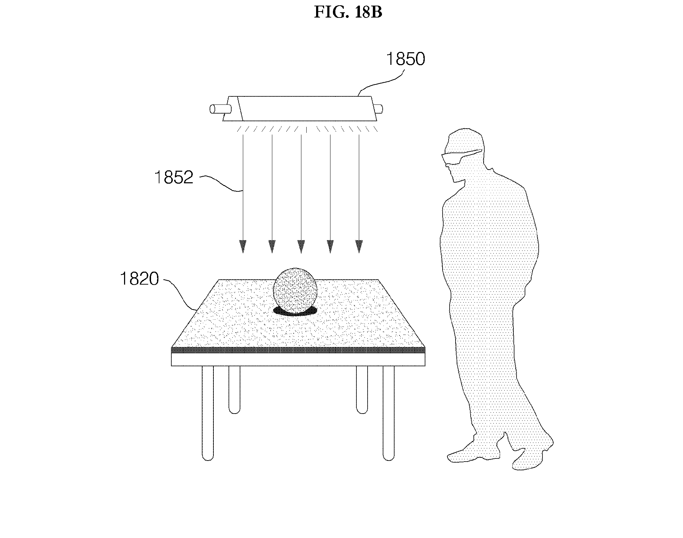

Additionally, to prevent (or reduce) glare when the intensity of light emitted from the display is significantly higher than ambient light and to achieve image display optimized for ambient brightness, an image 1820, to which image quality setting values (such a brightness, a sharpness, and a color saturation) lower than previous values are applied, may be displayed when the intensity of the light 1852 from the external light source 1850 is less than the reference level, as shown in FIG. 18B.

The image quality setting value setting operation S1520 may include setting at least one setting value (included in the image quality setting values) to a higher value as the detected intensity of light increases. The setting values may be set to automatically change in proportion to the detected intensity of light.

For example, when the intensity of light incident on a vertically arranged display is the product of the intensity of light from an external light source and an interruption factor caused by arrangement of the image display apparatus and other pieces of furniture, refraction, and/or the like, the intensity of light incident on a horizontally arranged display may approximate the intensity of light from the external light source since the influence of the interruption factor is significantly reduced when the display is arranged horizontally. The interruption factor may be represented by a number less than 1.

Accordingly, when initial setting values or previous setting values are set such that the contrast ratio is 100, the brightness is 150, the sharpness is 70, and the color saturation is 70, at least one of the setting values may be divided by the interruption factor. As a result, the at least one of the setting values may be increased since the interruption factor is less than 1.

The method may further include displaying a setting menu window for setting the image quality setting values, wherein the setting values may be changed by a user input.

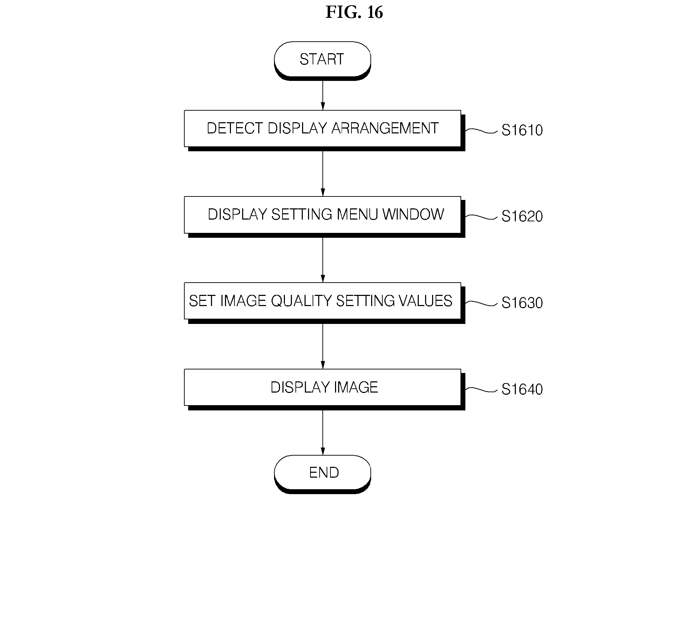

As shown in FIG. 16, a method for operating an image display apparatus according to another embodiment may include detecting an arrangement state of a display (S1610), displaying a setting menu window for setting image quality setting values (S1620), setting an image quality setting value based on an input made via the setting menu window (S1630), and displaying an image on the display based on the image quality setting value (S1640).

A difference between the FIG. 16 embodiment and other embodiments is that an arrangement state of the display is detected and a setting menu window is displayed. The following description may focus upon this difference.

The setting menu window may include information associated with the arrangement state of the display or information associated with a detected external environment.

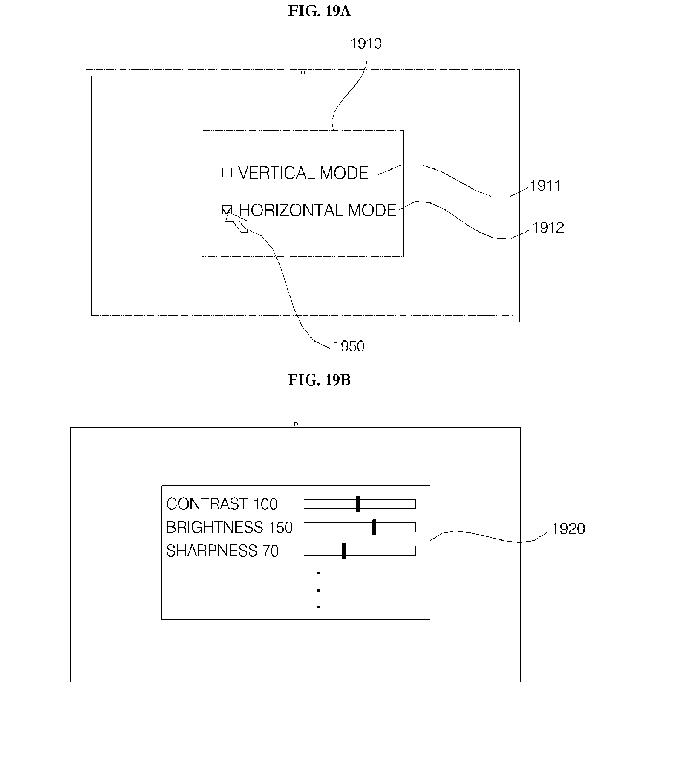

FIGs. 19A to 19C illustrate various examples of the setting menu window, although embodiments are not limited thereto.

The arrangement state of the display may include slope information of the display. Arrangement of the display may be divided into a horizontal arrangement mode and a vertical arrangement mode. As shown in FIG. 19A, a setting menu window 1910 may include a menu for selecting a vertical arrangement mode 1911 having image quality setting values appropriate for the vertical arrangement, or a menu for selecting a horizontal arrangement mode 1912 having image quality setting values appropriate for the horizontal arrangement.

Either the vertical arrangement mode 1911 or the horizontal arrangement mode 1912 may be selected by selecting a check box of the vertical arrangement mode or a check box of the horizontal arrangement mode, in the setting menu window 1910 using a pointer 1950 displayed in response to movement of the remote control device 200 (e.g. a pointing device 201), and an input operation for setting image quality setting values in the setting menu window may also be performed using the remote control device 200. Although the setting menu window including check boxes is shown in FIG. 19A, other types of graphical user interfaces (GUI) may also be implemented.

The user may directly change each image quality setting value using a setting menu window 1920, as shown in FIG. 19B.

The setting menu window may include recommended setting value information based on the arrangement state of the display.

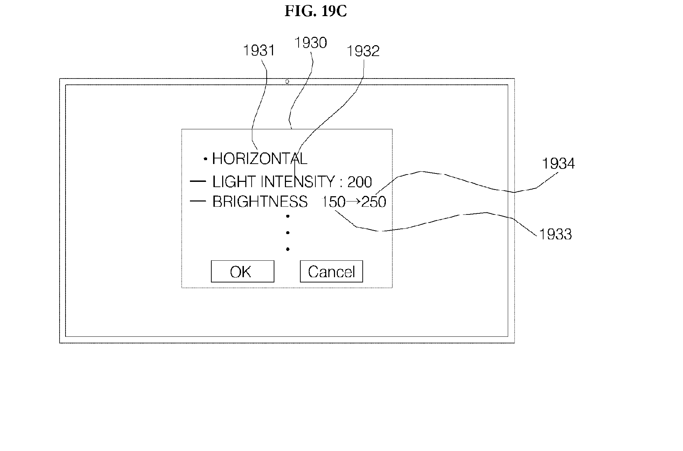

Referring to FIG. 19C, a setting menu window 1930 may include a display arrangement state 1931, external environment information (such as intensity of light from an external light source 1932), previous setting values 1933, and recommended setting values 1934. When the user approves change of the setting values to the recommended setting values 1934, the setting values may be changed to the recommended setting values 1934. Although one recommended setting value is displayed for all setting values in FIG. 19C, an individual recommended value may be displayed for each setting value.

A setting menu window including a variety of information may be displayed to help users achieve optimal setting. Additionally, users may select whether or not to apply an automatic setting value change function.

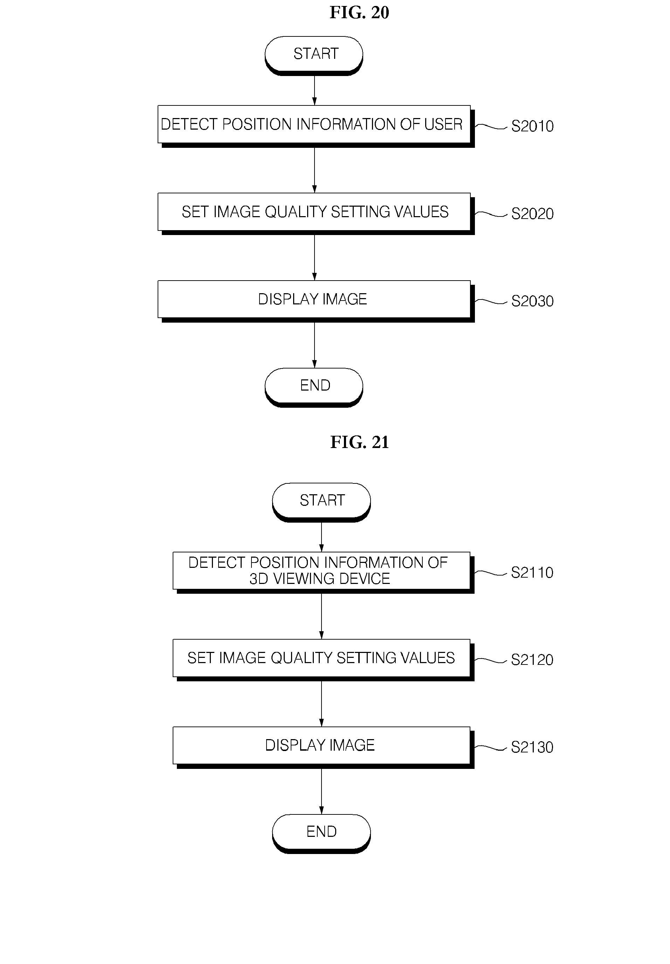

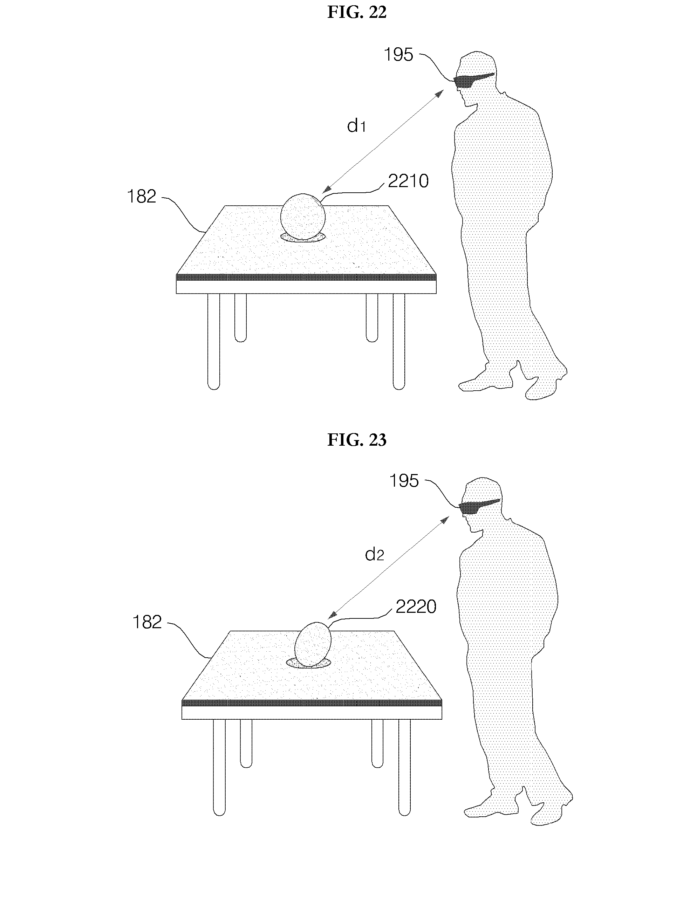

FIGs. 20 to 21 are flow charts illustrating a method for operating an image display apparatus according to an embodiment. FIGs. 22 to 26 illustrate examples of a method for operating an image display apparatus according to the embodiment. Other operations, orders of operations and embodiments may also be provided.

In a method for operating the image display apparatus according to an embodiment, the controller 170 may detect (or determine) position information of a user, as shown in FIG. 20 (S2010).

The controller 170 may detect where the user is located using the sensor unit 160 or the image capture unit 190. For example, the controller 170 may detect the position information of the user based on a position sensor in the sensor unit 160 or may detect the position information of the user based on an image captured using the image capture unit 190.

The position information may include information of a distance between the user and the display 180, and/or information of an angle between the user and the display 180.

The controller 170 may then set image quality setting values based on the detected position information of the user (S2020) and control the display 180 to display an image based on the image quality setting values (S2030).

That is, image quality setting values may be applied that are optimized based on position information (such as the distance and direction) of the user with respect to the display 180.

The image may be a 3D image.

When a left-eye image and a right-eye image displayed on the display 180 are separately input to the left eye and the right eye of a person, the person may perceive the input images as a 3D image. The distance between the person's eyes and the 3D image may be referred to as a "viewing distance." The viewing distance may be inversely proportional to disparity between the left-eye image and the right-eye image. Accordingly, the perceived depth of objects in the left-eye image and the right-eye image of a 3D image may be adjusted by adjusting disparity of each object in the left-eye image and the right-eye image.

However, disparity of a 3D image may be fixed and thus the appropriate viewing distance may be fixed so that users may experience sore eyes or headaches if they view a 3D image at a position out of the appropriate viewing distance. The 3D image may also appear to be distorted.

Accordingly, image quality setting values (such as 3D rendering setting values and disparity) may be set and applied based on position information of the user to achieve optimized 3D image viewing.

3D rendering setting values may provide a sense of realism to an image taking into consideration external information of the image (such as the color and position of a light source) to generate a 3D image. The 3D rendering setting values may include at least one setting value such as a contrast ratio, a brightness, a sharpness, a color saturation, and a disparity and may also include image processing setting values for increasing the sense of volume, texture, and realism of the object. The types and set values of the 3D rendering setting values may vary based on which rendering scheme is applied.

The display may be arranged (or provided) parallel to the ground.

When the display is arranged horizontally, the distance between the user and the display may significantly vary based on whether the user is seated or standing when using the image display apparatus.

When a 3D object 2210 is displayed on a display 182 that is arranged horizontally (as shown in FIG. 22), the user may view a 3D object 2210 without distortion if the user or the 3D viewing device 195 is located at an appropriate viewing distance d1.

However, when the distance d2 between the user or the 3D viewing device 195 and the display is greater than the appropriate distance d1 (as shown in FIG. 23), the user may perceive the 3D object as a distorted 3D object 2220 that appears to protrude more than the original image.

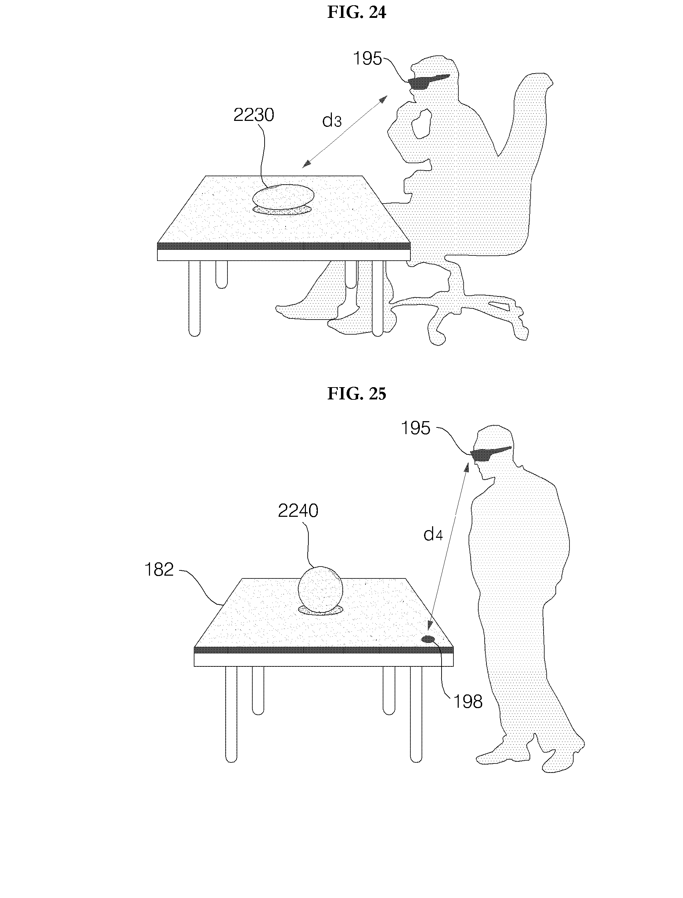

When the distance d3 between the user or the 3D viewing device 195 and the display is less than the appropriate distance d1 (as shown in FIG. 24), the user may perceive the 3D object as a distorted 3D object 2230 that appears to protrude less than the original image.

Accordingly, embodiments may apply correction values based on the distance between the user and the display to image quality setting values to prevent distortion of a 3D image due to deviation from the appropriate distance, thereby helping users correctly use 3D images and content.

Influences of external environments (e.g. an external light source) may vary depending on the arrangement state of the display and aspects of the use of the image display apparatus by the user such as the position of the user vary depending on the arrangement state of the display. Images displayed on the display may be viewed differently depending on an ambient environment even when the images are identical due to influences of ambient environments, such as luminance, color temperature, and/or the like.

The horizontally arranged display may have a wide area and angle for receiving light from an external light source (such as a fluorescent lamp), compared to when the display is arranged vertically, and the horizontally arranged display may have a different viewing angle from when the display is arranged vertically. Accordingly, an optimized image quality setting may be more required for the horizontally arranged display. Thus, in embodiments, image quality setting values may be adjusted based on position information including a distance and a direction of the user and an arrangement state of the display that is arranged horizontally.

The image quality setting values may include at least one of a contrast ratio, a brightness, a sharpness, a color saturation, a color, and a 3D rendering setting value.

The image quality setting value setting operation S2020 may include increasing at least one setting value from previous image quality setting values when the distance between the user and the display is greater than a reference distance.

That is, when the detected distance between the user and the display is greater than the reference distance, an image displayed on the display may appear to be distorted and therefore image quality setting values (such as a 3D rendering setting value, brightness, sharpness, and color saturation) may be increased compared to previous values to secure the appropriate viewing distance of the 3D image and thus to more correctly display the 3D image.

Alternatively, the image quality setting value setting operation S2020 may include setting at least one setting value (included in the image quality setting values) to a higher value as the detected distance between the user and the display increases. That is, the setting values may be set to automatically change in proportion to the detected distance. At least one of the setting values (included in the image quality setting values) may also be set to a lower value as the detected distance between the user and the display decreases, thereby preventing distortion of the 3D image.

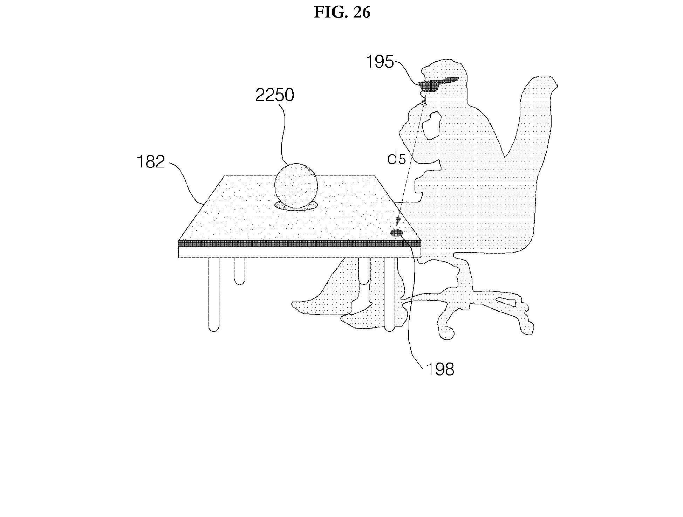

FIGs. 25 and 26 illustrate examples in which image quality setting values (or configuration values) vary according to position of the user or the 3D viewing device 195 are applied when a 3D image is displayed on a display 182 (that is arranged horizontally).

As shown in FIG. 25, when the distance d4 between the user or the 3D viewing device 195 and the display is greater than the appropriate distance d1, a 3D object 2240 is displayed by increasing at least one setting value included in image quality setting values (preferably, a 3D rendering setting value) of the 3D object 2240 so that the user perceives the 3D object 2240 as being identical or similar to the original image.

The wireless communication unit 198 (of the image display apparatus 100) that communicates with the wireless communication unit 930 (of the 3D viewing device 195) may be provided on the front side of the display (as shown in FIG. 25) and the position of the 3D viewing device 195 may be detected through the wireless communication unit 198. The sensor unit 160 or the image capture unit 190 may also be provided on the front side of the display.

As shown in FIG. 26, when the distance d4 between the user or the 3D viewing device 195 and the display is less than the appropriate distance d1, a 3D object 2250 is displayed by decreasing at least one setting value included in image quality setting values (and more preferably a 3D rendering setting value) of the 3D object 2250 so that the user perceives the 3D object 2250 as being identical or similar to the original image.

Accordingly, embodiments may apply correction values based on the distance between the user and the display to image quality setting values to prevent distortion of a 3D image due to the distance difference from the appropriate distance, thereby helping users correctly use 3D images and content.

The reference distance may be determined to be different based on size of the display, and may also be determined by user input.

The method may include displaying a setting menu window for setting the image quality setting values and the image quality setting values may be changed according to user input.

As shown in FIG. 21, the method for operating the image display apparatus may include detecting position information of a 3D viewing device (S2110), setting image quality setting values based on the position information (S2120), and displaying an image on the display based on the image quality setting values (S2130).

When the user views a 3D image through a 3D viewing device, the position of the user may be detected using more various and more correct methods.

The sensor unit 160 or the image capture unit 190 may detect the position of the 3D viewing device 195 for 3D image viewing. For example, the user or the 3D viewing device 195 may be detected using a position sensor in the sensor unit 160. Alternatively, the user or the 3D viewing device 195 may be detected using an image captured by the image capture unit 190. The position of the 3D viewing device 195 may also be detected through the wireless communication unit 198 (of the image display apparatus 100) that communicates with the wireless communication unit 930 (of the 3D viewing device 195).

While the position information of the user is directly detected through the sensor unit or the image capture unit in the embodiment described with reference to FIG. 20, the FIG. 21 embodiment differs from the FIG. 20 embodiment in that image quality setting values adjusted based on position information of the user determined by detecting the 3D viewing device are applied and is similar to the FIG. 20 embodiment in that an image according to optimized settings is displayed at the image display operation.

Accordingly, similar to FIG. 20, the display may be arranged parallel to the ground and the image may be a 3D image.

The image quality setting value setting operation S2120 may include increasing at least one setting value (included in previous or default image quality setting values) when the distance between the 3D viewing device and the display is greater than the reference distance, and decreasing the at least one setting value when the distance between the 3D viewing device and the display is less than the reference distance.

Alternatively, the image quality setting value setting operation S2120 may include setting at least one setting value (included in the image quality setting values) to a higher value as the detected distance between the 3D viewing device and the display increases. That is, the setting values may be set to automatically change in proportion to the detected distance.

The reference distance may be determined to be different based on the size of the display and may also be determined by user input.

An image display apparatus may include a display, a sensor unit for detecting position information of a user or a 3D viewing device, and a controller for setting an image quality setting value based on the position information and displaying an image on the display based on the image quality setting value.

Image quality setting values may be applied that are optimized based on the arrangement state of the display and the positional relationship between the display and the user.

An image display apparatus and a method for operating the same may have a variety of advantages.

For example, optimized image quality setting values (or configuration values) may be applied so that content (and specifically a 3D image) may be more correctly and conveniently used, thereby improving user convenience. Additionally, screen arrangement and screen switching optimized for use of content may be implemented.

The image display apparatus and the method for operating the same are not limited in their applications to the configurations and methods of the embodiments described above and all or some of the embodiments may be selectively combined to implement various modifications.

A method for operating an image display apparatus may be embodied as processor readable code stored on a processor readable medium provided in the image display apparatus. The processor readable medium includes any type of storage device that stores data that can be read by a processor. Examples of the processor readable medium include Read-Only Memory (ROM), Random-Access Memory (RAM), CD-ROMs, magnetic tape, floppy disks, optical data storage devices, and so on. The processor readable medium may also be embodied in the form of carrier waves as signals transmitted over the Internet. The processor readable medium may also be distributed over a network of coupled processor systems so that the processor readable code is stored and executed in a distributed fashion.

Embodiments may be made in view of problems, and it may be an object of embodiments to provide screen arrangement and screen switching optimized for use of content to improve user convenience.

It is another object to provide an image display apparatus and a method for operating the same, wherein a 3D image can be correctly and conveniently used and can be displayed optimally for viewing from various directions.

A method may be provided for operating an image display apparatus that includes detecting a slope of a display, setting an image quality setting value based on the slope, and displaying an image on the display based on the image quality setting value.

A method may be provided for operating an image display apparatus that includes detecting an arrangement state of a display, displaying a setting menu window for setting image quality setting values, setting an image quality setting value based on input made on the setting menu window, and displaying an image on the display based on the image quality setting value.

A method may be provided for operating an image display apparatus that includes detecting position information of a user or a 3D viewing device, setting an image quality setting value based on the position information, and displaying an image on a display based on the image quality setting value.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to affect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A method for operating an image display apparatus, the method comprising:
determining information regarding an arrangement of a display or determining position information of a user or a three-dimensional (3D) viewing device;
setting an image quality setting value based on the determined information; and
displaying a perceived three-dimensional (3D) image on the display based on the set image quality setting value.

2. The method according to claim 1, wherein determining information regarding an arrangement of the display includes determining a slope of the display.

3. The method according to claim 2, wherein the image quality setting value includes at least one of a contrast ratio, a brightness, a sharpness, a color saturation, and a 3D rendering setting value.

4. The method according to claim 2, wherein setting the image quality setting value includes increasing at least one setting value from previous image quality setting values when an inclination angle corresponding to the determined slope is less than a predetermined angle.

5. The method according to claim 2, wherein setting the image quality setting value includes setting at least one setting value to a higher value when the determined slope of the display decreases from a previous value.

6. The method according to claim 1, wherein determining information regarding an arrangement of the display includes determining an arrangement state of the display.

7. The method according to claim 6, further comprising displaying a setting menu window, the setting menu window including information for setting at least one image quality setting value.

8. The method according to claim 7, wherein setting the image quality setting value includes setting the image quality setting value based on the displayed setting menu window.

9. The method according to claim 8, wherein displaying the setting menu window includes displaying information related to image quality setting values.

10. The method according to claim 9, wherein the image quality setting value includes at least one of a contrast ratio, a brightness, a sharpness, a color saturation, color, and a 3D rendering setting value.

11. The method according to claim 9, wherein the setting menu window includes further information associated with the arrangement state of the display.

12. The method according to claim 9, wherein the setting menu window includes further information associated with a detected external environment.

13. The method according to claim 9, wherein the setting menu window further includes recommended setting value information based on the determined arrangement state of the display.

14. The method according to claim 1, wherein determining the position information determining includes information of a distance between the display and the user or the 3D viewing device.

15. The method according to claim 14, wherein setting the image quality setting value includes setting at least one setting value to a higher value as the distance increases between the display and the user or the 3D viewing device.
